# EUROPÄISCHE PATENTSCHRIFT

(11) **EP 4 089 015 B1**
(45) Veröffentlichungstag und Bekanntmachung des Hinweises auf die Patenterteilung: **28.08.2024**
(21) Anmeldenummer: 22173074.0
(22) Anmeldetag: 12.05.2022
(51) Int. Cl.: B64D 11/06

(54) **FLUGZEUGSITZBEFESTIGUNGSVORRICHTUNG**
AIRCRAFT SEAT MOUNTING APPARATUS
DISPOSITIF DE FIXATION DE SIÈGE D'AÉRONEF

(30) Priorität: 12.05.2021 DE 102021112519
(43) Veröffentlichungstag der Anmeldung: 16.11.2022
(73) Patentinhaber: Recaro Aircraft Seating GmbH & Co. KG, 74523 Schwäbisch Hall (DE)
(72) Erfinder: Drenzeck, Thomas, 74545 Michelfeld (DE); Spelsberg-Korspeter, Gottfried, 74523 Schwäbisch Hall (DE)
(74) Vertreter: Daub, Thomas

(56) Entgegenhaltungen:
- WO-A1-2016/037069
- WO-A1-2020/035571
- US-B1- 9 663 232

## Beschreibung

### Stand der Technik

Die Erfindung betrifft eine Flugzeugsitzbefestigungsvorrichtung nach dem Oberbegriff des Patentanspruchs 1.

Aus der Druckschrift WO 2020/035571 A1 ist bereits eine Flugzeugsitzbefestigungsvorrichtung zur Befestigung wenigstens eines Teils eines Flugzeugsitzes an zumindest einer, an einer Flugzeugstruktur befestigten Befestigungsschiene, mit einer Sitzgrundstruktur, mit zumindest einem Fittingelement, das dazu vorgesehen ist, mit der Befestigungsschiene gekoppelt zu werden, und mit wenigstens einer Sitzfußeinheit, die zumindest in einem Überlastfall dazu vorgesehen ist, zumindest eine Ausgleichsbewegung der Sitzgrundstruktur, insbesondere relativ zu der Befestigungsschiene, zuzulassen, vorgeschlagen worden.

Die Aufgabe der Erfindung besteht insbesondere darin, eine gattungsgemäße Vorrichtung mit verbesserten Eigenschaften hinsichtlich einer Sicherheit, insbesondere durch eine Reduzierung von Lasten in einer Befestigungsschiene bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzbefestigungsvorrichtung zur Befestigung wenigstens eines Teils eines Flugzeugsitzes an zumindest einer, an einer Flugzeugstruktur befestigten Befestigungsschiene, mit einer Sitzgrundstruktur, mit zumindest einem Fittingelement, das dazu vorgesehen ist, mit der Befestigungsschiene gekoppelt zu werden, und mit wenigstens einer Sitzfußeinheit, die zumindest in einem Überlastfall dazu vorgesehen ist, zumindest eine Ausgleichsbewegung der Sitzgrundstruktur, insbesondere relativ zu der Befestigungsschiene, zuzulassen.

Es wird vorgeschlagen, dass die wenigstens eine Sitzfußeinheit einen Anbindungsgrundkörper, welcher mit dem Fittingelement verbunden ist, und einen Ausgleichsgrundkörper, welcher in jedem Betriebszustand starr mit der Sitzgrundstruktur verbunden ist, aufweist, wobei der Anbindungsgrundkörper und der Ausgleichsgrundkörper über zumindest eine Schienenverbindung miteinander gekoppelt und entlang einer Führungsbahn beweglich zueinander gelagert sind. Durch eine erfindungsgemäße Ausgestaltung kann eine vorteilhaft sichere Flugzeugsitzbefestigungsvorrichtung bereitgestellt werden. Durch die erfindungsgemäße Ausgestaltung kann eine Ausgleichsbewegung vorteilhaft definiert entlang der Führungsbahn erfolgen. Dadurch kann eine Schädigung und/oder ein Versagen der Sitzgrundstruktur und/oder des Flugzeugsitzes in dem Überlastfall vorteilhaft vermieden werden. Ferner kann durch die erfindungsgemäße Ausgestaltung eine vorteilhaft stabile Kopplung des Anbindungsgrundkörpers und des Ausgleichsgrundkörpers erreicht werden. Zudem kann durch die erfindungsgemäße Ausgestaltung eine vorteilhaft kompakte Sitzfußeinheit bereitgestellt werden.

Unter einer "Flugzeugsitzbefestigungsvorrichtung" soll vorzugsweise eine Vorrichtung verstanden werden, die dazu vorgesehen ist, den Flugzeugsitz und/oder eine Flugzeugsitzanordnung auf einer Aufständerebene zumindest teilweise zu befestigen. Vorzugsweise ist die Flugzeugsitzbefestigungsvorrichtung dazu vorgesehen, den Flugzeugsitz auf einem Kabinenboden eines Flugzeugs aufzuständern. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Flugzeugsitz" soll vorzugsweise ein Sitz verstanden werden, der dazu vorgesehen ist, in einer Flugzeugkabine eines Flugzeugs aufgeständert zu werden, wobei ein Passagier während eines Fluges auf dem Flugzeugsitz sitzen kann. Vorzugsweise ist der Flugzeugsitz zu einer Montage auf der Sitzgrundstruktur vorgesehen. Besonders bevorzugt ist der Flugzeugsitz mit der Sitzgrundstruktur verbunden. Vorzugsweise steht der Flugzeugsitz nicht in direktem Kontakt mit dem Kabinenboden. Vorzugsweise ist der Flugzeugsitz als ein Business-Class oder First-Class-Sitz ausgebildet. Grundsätzlich kann die Flugzeugsitzbefestigungsvorrichtung auch zur Befestigung wenigstens eines Teils zumindest einer Umhausung, zumindest einer Konsole und/oder zumindest einer Ottomane an der Flugzeugstruktur vorgesehen sein. Vorzugsweise ist die zumindest eine Umhausung, die zumindest eine Konsole und/oder die zumindest eine Ottomane mit der Sitzgrundstruktur verbunden.

Unter einer "Sitzgrundstruktur" soll insbesondere eine tragende Struktur verstanden werden, über die Gewichtskräfte des Flugzeugsitzes und/oder Gewichtskräfte von weiteren Teilen, insbesondere der zumindest einen Umhausung, der zumindest einen Konsole und/oder der zumindest einen Ottomane, sowie gegebenenfalls Gewichtskräfte eines auf dem Flugzeugsitz sitzenden Passagiers, insbesondere über die wenigstens eine Sitzfußeinheit, in die Flugzeugstruktur eingeleitet werden können. Vorzugsweise ist die Sitzgrundstruktur als ein Rahmen ausgebildet. Vorzugsweise weist die Sitzgrundstruktur mehrere miteinander verbundene Trägerelemente auf, die insbesondere den Rahmen ausbilden. Alternativ kann die Sitzgrundstruktur auch als eine Aufnahmeplatte ausgebildet sein. Vorzugsweise bildet die Sitzgrundstruktur eine Plattform aus, auf der der Flugzeugsitz angeordnet werden kann. Grundsätzlich ist es ebenfalls denkbar, dass die Sitzgrundstruktur als ein Teil einer Aufständereinheit ausgebildet ist. Vorzugsweise ist die Sitzgrundstruktur von dem Kabinenboden beabstandet. Vorzugsweise steht die Sitzrundstruktur nicht in direktem Kontakt mit dem Kabinenboden.

Unter einer "Flugzeugstruktur" soll vorzugsweise eine Tragstruktur des Flugzeugs verstanden werden, mit der der Flugzeugsitz zu einer betriebssicheren Verwendung in der Flugzeugkabine fest gekoppelt werden kann. Vorzugsweise ist die Flugzeugstruktur zumindest teilweise als der Kabinenboden der Flugzeugkabine ausgebildet.

Unter einem "Fittingelement" soll vorzugsweise ein Element verstanden werden, das zu einer Befestigung eines mit dem Fittingelement verbundenen Bauteils, insbesondere der Sitzfußeinheit und/oder der Sitzgrundstruktur, an dem Kabinenboden vorgesehen ist. Vorzugsweise ist das Fittingelement in einem vollständig montierten Zustand in einer Ausnehmung in dem Kabinenboden, insbesondere in der Befestigungsschiene, gehalten.

Vorzugsweise ist die zumindest eine Befestigungsschiene in einem montierten Zustand fest mit der Flugzeugstruktur verbunden. Vorzugsweise ist die zumindest eine Befestigungsschiene in einem montierten Zustand fest mit dem Kabinenboden verbunden, insbesondere in den Kabinenboden eingelassen. Vorzugsweise bildet die zumindest eine Befestigungsschiene ein Hohlprofil aus, das zu einer formschlüssigen Verbindung mit einem Element, insbesondere des Fittingelements, vorgesehen ist. Vorzugsweise weist die zumindest eine Befestigungsschiene auf ihrer Oberseite eine Führungsöffnung auf, durch die in einem montierten Zustand zumindest ein Teil des Fittingelements geführt ist. Vorzugsweise weist die zumindest eine Befestigungsschiene in zumindest im Wesentlichen gleichen Abständen Montagebereiche auf, in denen die Führungsöffnung jeweils einen breiteren Querschnitt aufweist. Unter "zumindest im Wesentlichen" soll vorzugsweise verstanden werden, dass eine Abweichung von einem vorgegebenen Wert insbesondere weniger als 25 %, vorzugsweise weniger als 10 % und besonders bevorzugt weniger als 5 % des vorgegebenen Werts beträgt. Vorzugsweise ist die Führungsöffnung in den Montagebereichen im Wesentlichen kreisrund ausgebildet. Bevorzugt sind die Montagebereiche zu einer Einführung eines Halteabschnitts des Fittingelements durch einen der Montagebereiche in die Befestigungsschiene zur Herstellung einer formschlüssigen Verbindung mit der Befestigungsschiene vorgesehen.

Unter einer "Sitzfußeinheit" soll vorzugsweise eine Einheit verstanden werden, die dazu vorgesehen ist, die Sitzgrundstruktur auf dem Kabinenboden aufzuständern, insbesondere die Sitzgrundstruktur mit der zumindest einen Befestigungsschiene zu koppeln. Vorzugsweise ist die wenigstens eine Sitzfußeinheit dazu vorgesehen, eine Ausgleichsbewegung zwischen der Sitzgrundstruktur und dem Kabinenboden zumindest im Wesentlichen zerstörungsfrei zuzulassen. Bevorzugt ist die von der wenigstens einen Sitzfußeinheit zugelassene Ausgleichsbewegung begrenzt. Vorzugsweise ist die Ausgleichsbewegung als eine Rotationsbewegung, als eine Linearbewegung oder als eine Kombination einer Rotations- und einer Linearbewegung ausgebildet. Unter "zerstörungsfrei" soll vorzugsweise verstanden werden, dass durch die Ausgleichsbewegung keine Elemente der Flugzeugsitzbefestigungsvorrichtung mechanisch beschädigt, insbesondere plastisch verformt, werden. Grundsätzlich ist es denkbar, dass ein Element der wenigstens einen Sitzfußeinheit bei einer Ausgleichsbewegung plastisch deformiert wird. Dabei ist es vorstellbar, dass dieses Element den Anbindungsgrundkörper und den Ausgleichsgrundkörper bei einer Belastung mit definierten Handholdlasten zueinander fixiert, wobei das Element bei einer Überschreitung der definierten Handholdlasten, insbesondere in dem Überlastfall, plastisch deformiert wird, um eine Ausgleichsbewegung aus einer Normalstellung zu ermöglichen.

Vorzugsweise ist der Anbindungsgrundkörper dazu vorgesehen, die Sitzfußeinheit über das Fittingelement an die Befestigungsschiene anzubinden. Vorzugsweise ist das Fittingelement kraftschlüssig und/oder formschlüssig mit dem Anbindungsgrundkörper verbunden. Alternativ oder zusätzlich wäre es denkbar, dass das Fittingelement stoffschlüssig mit dem Anbindungsgrundkörper verbunden ist.

Vorzugsweise ist der Ausgleichsgrundkörper dazu vorgesehen, die Sitzfußeinheit mit der Sitzgrundstruktur zu verbinden. Vorzugsweise ist der Ausgleichsgrundkörper kraftschlüssig und/oder formschlüssig mit der Sitzgrundstruktur verbunden. Unter "kraftschlüssig und/oder formschlüssig verbunden" soll vorzugsweise eine lösbare Verbindung verstanden werden, wobei eine Haltekraft zwischen zwei Bauteilen vorzugsweise durch einen geometrischen Eingriff der Bauteile ineinander und/oder eine Reibkraft zwischen den Bauteilen übertragen wird. Alternativ oder zusätzlich wäre es denkbar, dass der Ausgleichsgrundkörper stoffschlüssig mit der Sitzgrundstruktur verbunden ist. Unter "stoffschlüssig verbunden" soll vorzugsweise durch einen Schweißprozess und/oder Klebeprozess verbunden und besonders vorteilhaft angeformt verstanden werden, wie durch die Herstellung aus einem Guss und/oder durch die Herstellung in einem Ein- oder Mehrkomponentenspritzverfahren. Vorzugsweise ist der Ausgleichsgrundkörper dazu vorgesehen, in dem Überlastfall die zumindest eine Ausgleichsbewegung relativ zu der Befestigungsschiene auszuführen. Vorzugsweise ist der Ausgleichsgrundkörper dazu vorgesehen, in dem Überlastfall die zumindest eine Ausgleichsbewegung relativ zu dem Kabinenboden auszuführen.

Unter einer "Ausgleichsbewegung" soll vorzugsweise eine Relativbewegung wenigstens zweier Elemente zueinander verstanden werden, die vorzugsweise zerstörungsfrei abläuft. Vorzugsweise wird eine Ausgleichsbewegung in dem Überlastfall ausgeführt, in dem zumindest eine Grenzlast für die Flugzeugsitzbefestigungsvorrichtung überschritten wird, und insbesondere nicht in einem Normalbetriebszustand. Vorzugsweise wird die Sitzgrundstruktur während einer Ausgleichsbewegung zumindest teilweise von dem Kabinenboden wegbewegt. Vorzugsweise wird die Sitzgrundstruktur bei der Ausgleichsbewegung gegenüber dem Kabinenboden verschwenkt. Vorzugsweise ist die Ausgleichsbewegung dazu vorgesehen, durch den Überlastfall auftretende Zug-, Druck- und/oder Torsionsbelastungen auf die Flugzeugsitzbefestigungsvorrichtung und/oder auf den Flugzeugsitz zu reduzieren und/oder zu eliminieren, wobei die Zug- und/oder Druckkräfte insbesondere durch eine Verformung des Kabinenbodens entstehen können. Unter einem "Überlastfall" soll vorzugsweise ein von einem Normalbetrieb verschiedener Betriebszustand verstanden werden, in dem insbesondere höhere Beschleunigungskräfte als in dem Normalbetrieb wirken. Bevorzugt ist der Überlastfall als ein Crashfall ausgebildet.

Grundsätzlich ist es möglich, dass sich der Kabinenboden in dem Überlastfall verformt, insbesondere verwindet. Dabei ist es möglich, dass sich die zumindest eine Befestigungsschiene in dem Überlastfall verformt. Durch die erfindungsgemäße Ausgestaltung kann eine Verwindung der Sitzgrundstruktur in dem Überlastfall vorteilhaft vermieden werden. Dadurch kann ein Bruch der Sitzgrundstruktur und/oder der zumindest einen Befestigungsschiene mittels der Flugzeugsitzbefestigungsvorrichtung vorteilhaft vermieden werden. Vorzugsweise ist die Flugzeugsitzbefestigungsvorrichtung dazu vorgesehen, durch den Überlastfall auftretende Verformungen der zumindest einen Befestigungsschiene auszugleichen, damit die Sitzgrundstruktur auch in dem Überlastfall zumindest im Wesentlichen verwindungsfrei ist. Vorzugsweise wird die Flugzeugsitzbefestigungsvorrichtung, insbesondere die Flugzeugsitzvorrichtung, zur Prüfung von Verformungen der Sitzgrundstruktur einer sogenannten "Pitch and Roll Vorverformung" unterzogen, die bei Tests zur Zulassung durchgeführt wird.

Vorzugsweise weist die wenigstens eine Sitzfußeinheit die zumindest eine Schienenverbindung auf. Besonders bevorzugt weist die wenigstens eine Sitzfußeinheit zumindest zwei Schienenverbindungen auf, die derart angeordnet sind, dass sie den Anbindungsgrundkörper und den Ausgleichsgrundkörper in zumindest einem translatorischen Freiheitsgrad, vorzugsweise in zwei translatorischen Freiheitsgraden, und in zumindest zwei rotatorischen Freiheitsgraden formschlüssig koppeln. Unter einer "Schienenverbindung" soll vorzugsweise eine Kopplung zweier Bauteile, insbesondere des Anbindungsgrundkörpers und des Ausgleichsgrundkörpers, verstanden werden, wobei die zwei Bauteile in zumindest einer Richtung, insbesondere einer Längsrichtung, aneinander beweglich gelagert sind und insbesondere in zumindest einer weiteren Richtung einen Formschluss ausbilden. Vorzugsweise ist die zumindest eine Schienenverbindung von einem Formschlusselement des Anbindungsgrundkörpers und von einem weiteren Formschlusselement des Ausgleichsgrundkörpers gebildet. Vorzugsweise weist der Anbindungsgrundkörper eine, insbesondere längliche, Nut und der Ausgleichsgrundkörper einen in die Nut eingreifenden, insbesondere länglichen, Fortsatz auf, wobei die Nut und der Fortsatz die Schienenverbindung ausbilden. Alternativ wäre es denkbar, dass der Ausgleichsgrundkörper eine, insbesondere längliche, Nut und der Anbindungsgrundkörper einen in die Nut eingreifenden, insbesondere länglichen, Fortsatz aufweist, wobei die Nut und der Fortsatz die Schienenverbindung ausbilden. Vorzugsweise ist die Nut als ein lineares Führungselement für den Fortsatz ausgebildet. Vorzugsweise ist der Fortsatz korrespondierend zu der Nut ausgebildet. Bevorzugt ist der Fortsatz und/oder die Nut jeweils als eine Schiene ausgebildet. Vorzugsweise ist der Fortsatz in einem gekoppelten Zustand des Anbindungsgrundkörpers und des Ausgleichsgrundkörpers zumindest teilweise in der Nut angeordnet. Vorzugsweise ist der Fortsatz gleitend in der Nut gelagert. Vorzugsweise sind der Ausgleichsgrundkörper und der Anbindungsgrundkörper gleitend aneinander gelagert. Vorzugsweise ist die zumindest eine Schienenverbindung als ein Gleitlager ausgebildet.

Vorzugsweise beschreibt die Führungsbahn eine Gerade oder einen Kreisbogenabschnitt. Grundsätzlich kann die Führungsbahn auch eine andere, einem Fachmann für sinnvoll erscheinende Form, insbesondere Kurvenform, aufweisen. Vorzugsweise ist die Führungsbahn in einer Ebene angeordnet. Vorzugsweise ist die Ebene, in der die Führungsbahn angeordnet ist, senkrecht zu dem Kabinenboden ausgerichtet. Vorzugsweise ist die Ebene, in der die Führungsbahn angeordnet ist, parallel zu einer Haupterstreckungsachse der zumindest einen Befestigungsschiene ausgerichtet.

Des Weiteren wird vorgeschlagen, dass eine Haupterstreckungsbahn der zumindest einen Schienenverbindung zumindest im Wesentlichen senkrecht zu der Aufständerebene ausgerichtet ist. Durch diese Ausgestaltung kann eine vorteilhaft reibungsarme Ausgleichsbewegung über die zumindest eine Schienenverbindung erreicht werden. Dadurch kann eine vorteilhaft sichere Funktionsweise der Sitzfußeinheit gewährleistet werden. Unter einer "Haupterstreckungsbahn" soll vorzugsweise eine Bahn verstanden werden, die sich entlang einer Längserstreckung der zumindest einen Schienenverbindung, insbesondere einer Längserstreckung der Nut und/oder des Fortsatzes erstreckt. Besonders bevorzugt verläuft die Haupterstreckungsbahn der zumindest einen Schienenverbindung an einer Stirnfläche des Fortsatzes. Vorzugsweise sind Haupterstreckungsbahnen mehrerer Schienenverbindungen in parallel zueinander angeordneten Ebenen angeordnet, wobei die Haupterstreckungsbahnen senkrecht zu den Ebenen betrachtet deckungsgleich sind. Unter "zumindest im Wesentlichen senkrecht" soll vorzugsweise eine Ausrichtung einer Achse, einer Richtung oder einer Bahn relativ zu einer Bezugsrichtung verstanden werden, wobei die Achse, Richtung oder Bahn und die Bezugsebene, Bezugsachse, Bezugsrichtung oder Bezugsbahn, insbesondere in einer Projektionsebene betrachtet, einen Winkel von 90 Grad einschließen und der Winkel eine maximale Abweichung von bevorzugt kleiner als 8 Grad, vorzugsweise kleiner als 5 Grad und besonders bevorzugt kleiner als 2 Grad aufweist. Vorzugsweise wird die Aufständerebene von dem Kabinenboden ausgebildet.

Ferner wird vorgeschlagen, dass die Sitzfußeinheit zumindest eine Arretiereinheit aufweist, die dazu vorgesehen ist, eine Bewegung der Sitzgrundstruktur in zumindest einer Richtung zu blockieren und/oder zu begrenzen. Durch diese Ausgestaltung kann vorteilhaft erreicht werden, dass die Sitzgrundstruktur nach einer Ausgleichsbewegung in einer Position verharrt. Ferner kann durch diese Ausgestaltung ein begrenzter Ausgleichsbereich für die Ausgleichsbewegung bereitgestellt werden. Dadurch kann eine stabile Position der Sitzgrundstruktur und des Flugzeugsitzes auch nach einem Überlastfall ermöglicht werden. Des Weiteren kann dadurch ein undefiniertes Bewegungsverhalten der Sitzgrundstruktur vorteilhaft vermieden werden. Unter einer "Arretiereinheit" soll vorzugsweise eine Einheit verstanden werden, die dazu vorgesehen ist, eine Bewegung des Ausgleichsgrundkörpers relativ zu dem Anbindungsgrundkörper in der zumindest einen Richtung zu blockieren und/oder zu begrenzen. Bevorzugt ist die zumindest eine Richtung zumindest im Wesentlichen senkrecht zu der Aufständerebene ausgerichtet. Vorzugsweise ist die zumindest eine Arretiereinheit dazu vorgesehen, eine Ausgleichsbewegung der Sitzgrundstruktur in zumindest einer Richtung zu blockieren und/oder zu begrenzen. Vorzugsweise ist die zumindest eine Arretiereinheit dazu vorgesehen, eine Ausgleichsbewegung der Sitzgrundstruktur in einer Richtung, die von der Aufständerebene, insbesondere von dem Kabinenboden, weggerichtet ist, zu begrenzen. Unter "begrenzen" soll vorzugsweise verstanden werden, dass eine Bewegung in zumindest einer Richtung bis zu einer bestimmten Stelle zugelassen und ab dieser Stelle verhindert wird. Vorzugsweise ist die zumindest eine Arretiereinheit dazu vorgesehen, eine Ausgleichsbewegung der Sitzgrundstruktur in einer Richtung, die zu der Aufständerebene, insbesondere zu dem Kabinenboden, hinwärts gerichtet ist, zu blockieren. Unter "blockieren" soll vorzugsweise verstanden werden, dass eine Bewegung in zumindest einer Richtung unmittelbar verhindert wird.

Zudem wird vorgeschlagen, dass die Arretiereinheit zumindest ein Formschlusselement umfasst, das dazu vorgesehen ist, in eine korrespondierende Raststruktur des Anbindungsgrundkörpers einzugreifen. Durch diese Ausgestaltung kann eine vorteilhaft sichere mechanische Blockierung einer Bewegung der Sitzgrundstruktur erreicht werden. Dadurch kann in einer Richtung, insbesondere zu der Aufständerebene hinwärts, eine vorteilhaft formschlüssige Blockierung erreicht werden. Vorzugsweise ist das zumindest eine Formschlusselement plattenförmig ausgebildet. Vorzugsweise weist das zumindest eine Formschlusselement einen Rastbereich auf, der dazu vorgesehen ist, die korrespondierende Raststruktur des Anbindungsgrundkörpers zu kontaktieren. Vorzugsweise ist das zumindest eine Formschlusselement in dem Rastbereich, insbesondere gegenüber einem Großteil des Formschlusselements, abgewinkelt ausgebildet. Unter einem "Großteil" sollen vorzugsweise zumindest 55 %, vorzugsweise zumindest 65 %, besonders bevorzugt zumindest 75 % und besonders vorteilhaft zumindest 85 % einer Längserstreckung des zumindest einen Formschlusselements verstanden werden. Bevorzugt ist die Längserstreckung, insbesondere eine Haupterstreckungsachse, des zumindest einen Formschlusselements zumindest im Wesentlichen senkrecht zu der Aufständerebene ausgerichtet. Besonders bevorzugt weist die Raststruktur des Anbindungsgrundkörpers mehrere, insbesondere identisch ausgebildete, keilförmige Fortsätze oder Ausnehmungen auf, die insbesondere entlang einer senkrecht zu der Aufständerebene ausgerichteten Achse angeordnet sind. Vorzugsweise ist die Raststruktur des Anbindungsgrundkörpers dazu vorgesehen, in einer Richtung weg von der Aufständerebene ein Vorbeigleiten des zumindest einen Formschlusselements zu ermöglichen. Vorzugsweise ist die Raststruktur des Anbindungsgrundkörpers dazu vorgesehen, in einer Richtung hin zu der Aufständerebene eine Bewegung des zumindest einen Formschlusselements zu blockieren.

Des Weiteren wird vorgeschlagen, dass das Formschlusselement zumindest teilweise als eine Blattfeder ausgebildet ist. Durch diese Ausgestaltung kann ein vorteilhaft reibungsarmes Vorbeigleiten des zumindest einen Formschlusselements an der Raststruktur erreicht werden. Dadurch kann eine vorteilhaft sichere Funktionsweise der Sitzfußeinheit bei einer Ausgleichsbewegung gewährleistet werden. Vorzugsweise ist das Formschlusselement zumindest im Wesentlichen aus einem elastisch verformbarem und/oder federnden Material gebildet. Vorzugsweise ist die Blattfeder zumindest im Wesentlichen aus einem Federstahl gebildet. Grundsätzlich wäre es auch denkbar, dass die Blattfeder aus einem Faserverbundwerkstoff gebildet ist.

Ferner wird vorgeschlagen, dass das Formschlusselement mittels eines Befestigungselements der Arretiereinheit formschlüssig und/oder kraftschlüssig mit dem Ausgleichsgrundkörper verbunden ist. Durch diese Ausgestaltung ist das Formschlusselement vorteilhaft fest mit dem Ausgleichsgrundkörper verbunden. Dadurch kann eine vorteilhafte Übertragung der Ausgleichsbewegung von dem Ausgleichsgrundkörper auf das Formschlusselement erfolgen. Dadurch wird eine vorteilhaft sichere Arretierung des Formschlusselements an der Raststruktur des Anbindungsgrundkörpers ermöglicht. Vorzugsweise ist eine Haupterstreckungsachse des Befestigungselements zumindest im Wesentlichen parallel zu der Aufständerebene ausgerichtet. Unter einer "Haupterstreckungsachse" eines Objekts soll vorzugsweise eine Achse verstanden werden, welche parallel zu einer längsten Kante eines kleinsten geometrischen Quaders verläuft, welcher das Objekt gerade noch vollständig umschließt. Unter "zumindest im Wesentlichen parallel" soll vorzugsweise eine Ausrichtung einer Achse, Richtung oder Bahn relativ zu einer Bezugsebene, Bezugsachse, Bezugsrichtung oder Bezugsbahn verstanden werden, wobei die Achse, Richtung oder Bahn gegenüber der Bezugsebene, Bezugsachse, Bezugsrichtung oder Bezugsbahn eine Abweichung bevorzugt kleiner als 8 Grad, vorzugsweise kleiner als 5 Grad und besonders bevorzugt kleiner als 2 Grad aufweist. Vorzugsweise ist das Befestigungselement als eine Schraube ausgebildet.

Zudem wird vorgeschlagen, dass der Anbindungsgrundkörper eine Ausnehmung aufweist, die dazu vorgesehen ist, das Befestigungselement der Arretiereinheit zumindest teilweise aufzunehmen. Durch diese Ausgestaltung kann eine vorteilhaft einfache Begrenzung einer Bewegung des Ausgleichsgrundkörpers relativ zu dem Anbindungsgrundkörper in einer Richtung bereitgestellt werden. Dadurch kann eine Befestigung des Formschlusselements vorteilhaft gleichzeitig als eine Begrenzung dienen. Vorzugsweise weist der Anbindungsgrundkörper einen Anschlagbereich auf. Vorzugsweise ist der Anschlagbereich in der Ausnehmung des Anbindungsgrundkörpers angeordnet. Vorzugsweise ist die Ausnehmung in dem Anschlagbereich gerundet, insbesondere halbkreisförmig, ausgebildet. Vorzugsweise ist das Befestigungselement in einer Normalstellung der Sitzfußeinheit teilweise in dem Anschlagbereich angeordnet. Vorzugsweise ist das Befestigungselement dazu vorgesehen, in dem Überlastfall aus der Ausnehmung herausbewegt zu werden. Vorzugsweise ist das Befestigungselement, insbesondere der Zylinderkopf des Befestigungselements, dazu vorgesehen, in dem Anschlagbereich gegen den Anbindungsgrundkörper anzuschlagen. Vorzugsweise ist der Anschlagbereich dazu vorgesehen, eine Bewegung des Ausgleichsgrundkörpers in einer Richtung zu der Aufständerebene hin zu begrenzen.

Des Weiteren wird vorgeschlagen, dass das Formschlusselement eine Nut aufweist, deren Haupterstreckungsbahn zumindest im Wesentlichen parallel zu der Haupterstreckungsbahn der zumindest einen Schienenverbindung ausgerichtet ist. Durch diese Ausgestaltung kann eine vorteilhaft leichte und stabile Struktur des Formschlusselements erreicht werden. Des Weiteren kann durch diese Ausgestaltung eine vorteilhafte Möglichkeit zur Führung in der Haupterstreckungsbahn der Nut bereitgestellt werden. Vorzugsweise ist die Nut als ein Langloch ausgebildet. Vorzugsweise ist die Nut als ein Durchgangsloch ausgebildet. Vorzugsweise erstreckt sich die Nut des Formschlusselements nicht in den abgewinkelten Rastbereich des Formschlusselements.

Ferner wird vorgeschlagen, dass die Arretiereinheit ein Anschlagelement umfasst, das fest mit dem Anbindungsgrundkörper verbunden, in der Nut des Formschlusselements geführt und dazu vorgesehen ist, eine Verschiebung der Sitzgrundstruktur, insbesondere eine Verschiebung des Ausgleichsgrundkörpers zu dem Anbindungsgrundkörper, zu begrenzen. Durch diese Ausgestaltung kann das Anschlagelement vorteilhaft in der Nut des Formschlusselements geführt werden. Dadurch kann eine maximale Auslenkung der Sitzgrundstruktur vorteilhaft sicher begrenzt werden. Ferner kann dadurch eine maximale Verschiebung des Ausgleichsgrundkörpers zu dem Anbindungsgrundkörper vorteilhaft einfach begrenzt werden. Vorzugsweise ist die Nut des Formschlusselements dazu vorgesehen, eine maximale Verschiebung des Ausgleichsgrundkörpers zu dem Anbindungsgrundkörper zu begrenzen. Vorzugsweise ist das Anschlagelement in der Nut des Formschlusselements geführt. Vorzugsweise ragt das Anschlagelement zumindest teilweise in die Nut des Formschlusselements hinein. Vorzugsweise ist das Anschlagelement stoffschlüssig mit dem Anbindungsgrundkörper verbunden.

Vorzugsweise ist das Anschlagelement als ein Fortsatz des Anbindungsgrundkörpers ausgebildet, der insbesondere durch eine Abfräsung hergestellt ist. Alternativ kann das Anschlagelement in den Anbindungsgrundkörper eingeschraubt sein. Bevorzugt ist das Anschlagelement als ein Bolzen oder als eine Schraube ausgebildet. Unter einer "Verschiebung" soll vorzugsweise eine Relativbewegung, insbesondere die Ausgleichsbewegung, verstanden werden.

Zudem wird vorgeschlagen, dass das Formschlusselement translatorisch beweglich zu dem Ausgleichsgrundkörper gelagert ist. Durch diese Ausgestaltung kann eine besonders vorteilhafte Arretierung des Ausgleichsgrundkörpers zu dem Anbindungsgrundkörper erreicht werden. Dadurch kann eine vorteilhaft sichere mechanische Blockierung einer Bewegung der Sitzgrundstruktur erreicht werden. Vorzugsweise weist das Formschlusselement eine Raststruktur auf. Vorzugsweise weist das Formschlusselement zumindest einen keilförmigen Fortsatz oder zumindest eine keilförmige Ausnehmung auf, die korrespondierend zu der Raststruktur des Anbindungsgrundkörpers ausgebildet ist. Vorzugsweise ist das Formschlusselement zumindest teilweise in dem Ausgleichsgrundkörper gelagert.

Des Weiteren wird vorgeschlagen, dass eine Bewegungsachse des Formschlusselements zumindest im Wesentlichen parallel zu der Aufständerebene ausgerichtet ist. Durch diese Ausgestaltung kann eine vorteilhaft reibungsarme und kraftarme Betätigung des Formschlusselements erfolgen. Dadurch kann eine vorteilhaft sichere Funktionsweise der Sitzfußeinheit bei einer Ausgleichsbewegung gewährleistet werden. Vorzugsweise ist die Bewegungsachse des Formschlusselements zumindest im Wesentlichen senkrecht zu der Führungsbahn der zumindest einen Schienenverbindung ausgerichtet. Vorzugsweise weist der Ausgleichsgrundkörper eine Ausnehmung auf, in der das Formschlusselement zumindest teilweise gelagert ist. Vorzugsweise ist das Formschlusselement gleitend in der Ausnehmung des Ausgleichsgrundkörpers gelagert. Vorzugsweise ist das Formschlusselement dazu vorgesehen, bei der Ausgleichsbewegung entlang der Bewegungsachse des Formschlusselements, insbesondere in die Ausnehmung des Ausgleichsgrundkörpers hinein, ausgelenkt zu werden. Grundsätzlich wäre es vorstellbar, dass das Formschlusselement in dem Ausgleichsgrundkörper um die Bewegungsachse des Formschlusselements zumindest im Wesentlichen drehfest gelagert ist. Dadurch kann eine undefinierte Stellung des Formschlusselements relativ zu der Raststruktur des Anbindungsgrundkörpers vorteilhaft verhindert werden.

Ferner wird vorgeschlagen, dass die Arretiereinheit ein Federelement aufweist, das zwischen dem Ausgleichsgrundkörper und dem Formschlusselement angeordnet und dazu vorgesehen ist, das Formschlusselement gegen die korrespondierende Raststruktur des Anbindungsgrundkörpers zu drücken. Durch diese Ausgestaltung kann eine vorteilhaft sichere Arretierung des Ausgleichsgrundkörpers zu dem Anbindungsgrundkörper erreicht werden. Dadurch kann eine vorteilhaft sichere mechanische Blockierung einer Bewegung der Sitzgrundstruktur erreicht werden. Vorzugsweise ist das Federelement als eine Druckfeder ausgebildet. Vorzugsweise ist das Federelement in der Ausnehmung des Ausgleichsgrundkörpers angeordnet. Vorzugsweise ist eine Wirkachse des Federelements parallel zu der Bewegungsachse des Formschlusselements ausgerichtet.

Zudem wird vorgeschlagen, dass die Flugzeugsitzbefestigungsvorrichtung zumindest ein Fittingverriegelungselement aufweist, das translatorisch beweglich an dem Anbindungsgrundkörper gelagert und dazu vorgesehen ist, das Fittingelement in der Befestigungsschiene zu verriegeln. Durch diese Ausgestaltung kann eine vorteilhaft sichere Verbindung zwischen der Flugzeugsitzbefestigungsvorrichtung und der Flugzeugstruktur, insbesondere der Befestigungsschiene, bereitgestellt werden. Des Weiteren kann dadurch eine vorteilhaft einfach zu handhabende und platzsparende Verriegelung ermöglicht werden. Vorzugsweise ist das zumindest eine Fittingverriegelungselement dazu vorgesehen, das Fittingelement, insbesondere den Halteabschnitt des Fittingelements, entlang einer Haupterstreckungsachse der Befestigungsschiene zu blockieren. Vorzugsweise ist das zumindest eine Fittingverriegelungselement entlang einer Bewegungsachse des zumindest einen Fittingverriegelungselements, die zumindest im Wesentlichen senkrecht zu der Aufständerebene ausgerichtet ist, translatorisch beweglich an dem Anbindungsgrundkörper gelagert.

Des Weiteren wird vorgeschlagen, dass das zumindest eine Fittingverriegelungselement und der Anbindungsgrundkörper über zumindest eine weitere Schienenverbindung miteinander gekoppelt sind. Durch diese Ausgestaltung kann das Fittingverriegelungselement besonders vorteilhaft gelagert werden. Vorzugsweise ist das zumindest eine Fittingverriegelungselement gleitend an dem Anbindungsgrundkörper gelagert. Bevorzugt weist die Flugzeugsitzbefestigungsvorrichtung zumindest eine weitere Schienenverbindung auf, über die das zumindest eine Fittingverriegelungselement gleitend an dem Anbindungsgrundkörper gelagert ist. Vorzugsweise ist das zumindest eine Fittingverriegelungselement mittels der zumindest einen weiteren Schienenverbindung in dem Anbindungsgrundkörper zumindest zu einem Großteil versenkbar. Vorzugsweise ist das zumindest eine Fittingverriegelungselement über die zumindest eine weitere Schienenverbindung entlang der Bewegungsachse des zumindest einen Fittingverriegelungselements beweglich gelagert. Vorzugsweise ist die Bewegungsachse des zumindest einen Fittingverriegelungselements zumindest im Wesentlichen senkrecht zu der Haupterstreckungsachse der Befestigungsschiene ausgerichtet. Grundsätzlich entspricht ein Funktionsprinzip der zumindest einen weiteren Schienenverbindung der zuvor beschriebenen zumindest einen Schienenverbindung der wenigstens einen Sitzfußeinheit.

Ferner wird vorgeschlagen, dass das zumindest eine Fittingverriegelungselement teilweise in die Befestigungsschiene versenkbar ist. Durch diese Ausgestaltung kann eine vorteilhaft sichere Verriegelung des Fittingelements in der Befestigungsschiene bereitgestellt werden. Vorzugsweise ist das zumindest eine Fittingverriegelungselement dazu vorgesehen ist, bei einer Verriegelung des Fittingelements mit der Befestigungsschiene in die Befestigungsschiene, insbesondere in das von der Befestigungsschiene ausgebildete Hohlprofil, eingeschoben zu werden. Vorzugsweise ist das zumindest eine Fittingverriegelungselement in der versenkten Stellung in einem der Montagebereiche der Befestigungsschiene angeordnet. Vorzugsweise bildet das zumindest eine Fittingverriegelungselement in einer in die Befestigungsschiene versenkten Stellung einen Formschluss entlang der Haupterstreckungsachse des Befestigungselements aus.

Zudem wird eine Flugzeugsitzvorrichtung mit dem zumindest einen Flugzeugsitz und mit der zumindest eine Flugzeugsitzbefestigungsvorrichtung vorgeschlagen. Durch diese Ausgestaltung kann eine vorteilhaft sichere Flugzeugsitzvorrichtung bereitgestellt werden. Des Weiteren kann durch diese Ausgestaltung eine vorteilhaft modulare Bauweise ermöglicht werden. Vorzugsweise ist die Flugzeugsitzvorrichtung dazu vorgesehen, vollständig montiert, insbesondere vormontiert, in der Flugzeugkabine aufgeständert zu werden. Vorzugsweise ist der zumindest eine Flugzeugsitz über die zumindest eine Flugzeugsitzbefestigungsvorrichtung mit dem Kabinenboden gekoppelt.

Die erfindungsgemäße Flugzeugsitzbefestigungsvorrichtung soll hierbei nicht auf die oben beschriebene Anwendung und Ausführungsform beschränkt sein. Insbesondere kann die erfindungsgemäße Flugzeugsitzbefestigungsvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination.

Es zeigen:
- Fig. 1: eine schematische Draufsicht auf eine erfindungsgemäße Flugzeugsitzbefestigungsvorrichtung in einem ersten Ausführungsbeispiel,
- Fig. 2: eine schematische, perspektivische Darstellung der erfindungsgemäßen Flugzeugsitzbefestigungsvorrichtung in dem ersten Ausführungsbeispiel,
- Fig. 3: eine schematische Schnittdarstellung der erfindungsgemäßen Flugzeugsitzbefestigungsvorrichtung in einer Normalstellung in dem ersten Ausführungsbeispiel,
- Fig. 4: eine schematische Schnittdarstellung der erfindungsgemäßen Flugzeugsitzbefestigungsvorrichtung in einer Ausgleichsstellung in dem ersten Ausführungsbeispiel,
- Fig. 5: eine schematische, perspektivische Schnittdarstellung der erfindungsgemäßen Flugzeugsitzbefestigungsvorrichtung in der Ausgleichsstellung in dem ersten Ausführungsbeispiel,
- Fig. 6: eine schematische Schnittdarstellung einer erfindungsgemäßen Flugzeugsitzbefestigungsvorrichtung in einer Normalstellung in einem zweiten Ausführungsbeispiel und
- Fig. 7: eine schematische Schnittdarstellung der erfindungsgemäßen Flugzeugsitzbefestigungsvorrichtung in einer Ausgleichsstellung in dem zweiten Ausführungsbeispiel.

### Beschreibung der Ausführungsbeispiele

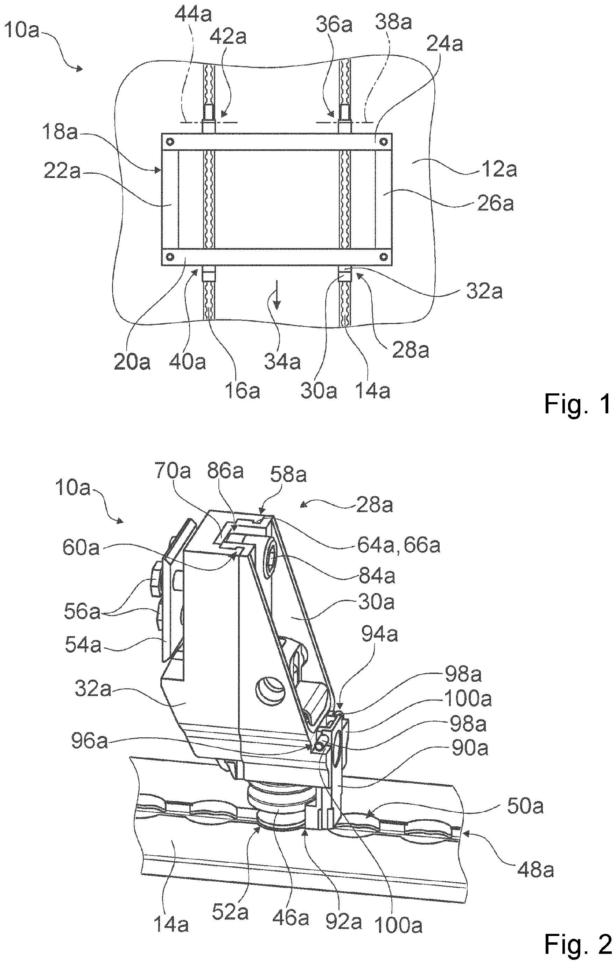

In den Figuren 1 bis 5 ist eine Flugzeugsitzbefestigungsvorrichtung 10a in einem ersten Ausführungsbeispiel gezeigt. Die Flugzeugsitzbefestigungsvorrichtung 10a ist dazu vorgesehen, einen nicht näher dargestellten Flugzeugsitz auf einem Kabinenboden 12a eines Flugzeugs aufzuständern. Im vorliegenden Fall ist der Flugzeugsitz als ein Business-Class-Sitz oder First-Class-Sitz ausgebildet. Alternativ könnte der Flugzeugsitz grundsätzlich auch als ein Economy-Class-Sitz oder Premium-Economy-Class-Sitz ausgebildet sein. Der Flugzeugsitz und die Flugzeugsitzbefestigungsvorrichtung 10a sind von einer Flugzeugsitzvorrichtung umfasst. Grundsätzlich kann die Flugzeugsitzvorrichtung zumindest eine Umhausung, zumindest eine Konsole und/oder zumindest eine Ottomane aufweisen, die über die Flugzeugsitzbefestigungsvorrichtung 10a mit dem Kabinenboden 12a gekoppelt sind. Die Flugzeugsitzvorrichtung ist dazu vorgesehen, vollständig montiert, insbesondere vormontiert, in einer Flugzeugkabine des Flugzeugs aufgeständert zu werden. Der Flugzeugsitz ist über die Flugzeugsitzbefestigungsvorrichtung 10a mit dem Kabinenboden 12a gekoppelt.

Die Flugzeugsitzbefestigungsvorrichtung 10a ist zur Befestigung wenigstens eines Teils des Flugzeugsitzes an einer, an einer Flugzeugstruktur befestigten Befestigungsschiene 14a vorgesehen. Die Flugzeugstruktur ist als der Kabinenboden 12a der Flugzeugkabine ausgebildet. Die Befestigungsschiene 14a ist in einem montierten Zustand fest mit der Flugzeugstruktur verbunden. Die Befestigungsschiene 14a ist in einem montierten Zustand fest mit dem Kabinenboden 12a verbunden, insbesondere in den Kabinenboden 12a eingelassen. Im vorliegenden Fall ist die Befestigungsschiene 14a als eine Airlineschiene ausgebildet.

Die Flugzeugsitzbefestigungsvorrichtung 10a ist zur Befestigung wenigstens eines Teils des Flugzeugsitzes an einer, an der Flugzeugstruktur befestigten weiteren Befestigungsschiene 16a vorgesehen. Die weitere Befestigungsschiene 16a ist identisch zu der Befestigungsschiene 14a ausgebildet. Eine Haupterstreckungsachse der weiteren Befestigungsschiene 16a ist parallel zu einer Haupterstreckungsachse der Befestigungsschiene 14a ausgerichtet. Die Flugzeugsitzbefestigungsvorrichtung 10a ist zur Befestigung wenigstens eines Teils des Flugzeugsitzes an der Befestigungsschiene 14a und der weiteren Befestigungsschiene 16a vorgesehen.

Die Flugzeugsitzbefestigungsvorrichtung 10a weist eine Sitzgrundstruktur 18a auf. Der Flugzeugsitz ist zu einer zumindest teilweisen Montage auf der Sitzgrundstruktur 18a vorgesehen. Der Flugzeugsitz ist mit der Sitzgrundstruktur 18a verbunden. Der Flugzeugsitz steht nicht in direktem Kontakt mit dem Kabinenboden 12a. Die zumindest eine Umhausung, die zumindest eine Konsole und/oder die zumindest eine Ottomane sind mit der Sitzgrundstruktur 18a verbunden. Die Sitzgrundstruktur 18a ist von dem Kabinenboden 12a beabstandet. Die Sitzgrundstruktur 18a steht nicht in direktem Kontakt mit dem Kabinenboden 12a. Die Sitzgrundstruktur 18a steht nicht in direktem Kontakt mit der Befestigungsschiene 14a. Die Sitzgrundstruktur 18a bildet eine Plattform aus, auf der zumindest der Flugzeugsitz angeordnet ist. Die Sitzgrundstruktur 18a ist im vorliegenden Fall als ein Rahmen ausgebildet. Die Sitzgrundstruktur 18a weist mehrere miteinander verbundene Trägerelemente 20a, 22a, 24a, 26a auf, die den Rahmen ausbilden. Die Trägerelemente 20a, 22a, 24a, 26a sind jeweils als Querträger oder Längsträger ausgebildet.

Die Flugzeugsitzbefestigungsvorrichtung 10a weist eine Sitzfußeinheit 28a auf. Die Sitzfußeinheit 28a umfasst einen Anbindungsgrundkörper 30a. Die Sitzfußeinheit 28a umfasst einen Ausgleichsgrundkörper 32a. Die Sitzfußeinheit 28a ist dazu vorgesehen, die Sitzgrundstruktur 18a mit der Befestigungsschiene 14a zu koppeln. Bezogen auf eine Sitzrichtung 34a ist die Sitzfußeinheit 28a an einem vorderen Ende der Flugzeugsitzbefestigungsvorrichtung 10a angeordnet. Die Sitzrichtung 34a entspricht einer Flugrichtung.

Die Flugzeugsitzbefestigungsvorrichtung 10a weist eine weitere Sitzfußeinheit 36a auf. Die weitere Sitzfußeinheit 36a ist dazu vorgesehen, die Sitzgrundstruktur 18a mit der Befestigungsschiene 14a zu koppeln. Bezogen auf die Sitzrichtung 34a ist die weitere Sitzfußeinheit 36a an einem hinteren Ende der Flugzeugsitzbefestigungsvorrichtung 10a angeordnet. Die weitere Sitzfußeinheit 36a weist ein nicht näher dargestelltes Schwenklager auf, das eine Schwenkachse 38a ausbildet, die zumindest im Wesentlichen parallel zu dem Kabinenboden 12a ausgerichtet ist. Die Sitzgrundstruktur 18a ist mittels der weiteren Sitzfußeinheit 36a schwenkbar zu dem Kabinenboden 12a gelagert. Außer einer Schwenkbewegung um die Schwenkachse 38a und einer Seitenbewegung in einer Querrichtung zu der Haupterstreckungsachse der Befestigungsschiene 14a erlaubt die weitere Sitzfußeinheit 36a keine Bewegung der Sitzgrundstruktur 18a.

Die Sitzgrundstruktur 18a wird während einer Ausgleichsbewegung zumindest teilweise von dem Kabinenboden 12a wegbewegt. Die Sitzgrundstruktur 18a wird während der Ausgleichsbewegung an der Sitzfußeinheit 28a von dem Kabinenboden 12a wegbewegt. Die Sitzgrundstruktur 18a wird bei der Ausgleichsbewegung gegenüber dem Kabinenboden 12a über die Schwenkachse 38a verschwenkt. Die Ausgleichsbewegung ist dazu vorgesehen, durch einen Überlastfall auftretende Zug-, Druck- und/oder Torsionsbelastungen auf die Flugzeugsitzbefestigungsvorrichtung 10a und/oder auf den Flugzeugsitz zu reduzieren und/oder zu eliminieren, wobei die Zug- und/oder Druckkräfte insbesondere durch eine Verformung des Kabinenbodens 12a entstehen können. Der Überlastfall ist als ein Crashfall ausgebildet.

Die Flugzeugsitzbefestigungsvorrichtung 10a weist eine zweite Sitzfußeinheit 40a auf. Die zweite Sitzfußeinheit 40a umfasst einen zweiten Anbindungsgrundkörper und einen zweiten Ausgleichsgrundkörper. Die zweite Sitzfußeinheit 40a ist identisch zu der Sitzfußeinheit 28a ausgebildet. Die zweite Sitzfußeinheit 40a ist dazu vorgesehen, die Sitzgrundstruktur 18a mit der weiteren Befestigungsschiene 16a zu koppeln. Bezogen auf die Sitzrichtung 34a ist die zweite Sitzfußeinheit 40a an dem vorderen Ende der Flugzeugsitzbefestigungsvorrichtung 10a angeordnet.

Die Flugzeugsitzbefestigungsvorrichtung 10a weist eine zweite weitere Sitzfußeinheit 42a auf. Die zweite weitere Sitzfußeinheit 42a ist identisch zu der weiteren Sitzfußeinheit 36a ausgebildet. Die zweite weitere Sitzfußeinheit 42a ist dazu vorgesehen, die Sitzgrundstruktur 18a mit der weiteren Befestigungsschiene 16a zu koppeln. Bezogen auf die Sitzrichtung 34a ist die zweite weitere Sitzfußeinheit 42a an dem hinteren Ende der Flugzeugsitzbefestigungsvorrichtung 10a angeordnet. Die zweite weitere Sitzfußeinheit 42a weist ein nicht näher dargestelltes Schwenklager auf, das eine Schwenkachse 44a ausbildet, die zumindest im Wesentlichen parallel zu dem Kabinenboden 12a ausgerichtet ist. Die Sitzgrundstruktur 18a ist mittels der zweiten weiteren Sitzfußeinheit 42a schwenkbar zu dem Kabinenboden 12a gelagert. Außer einer Schwenkbewegung um die Schwenkachse 44a und einer Seitenbewegung in einer Querrichtung zu der Haupterstreckungsachse der weiteren Befestigungsschiene 16a erlaubt die zweite weitere Sitzfußeinheit 42a keine Bewegung der Sitzgrundstruktur 18a.

Die Sitzfußeinheit 28a ist in dem zumindest einen Überlastfall dazu vorgesehen, zumindest eine Ausgleichsbewegung der Sitzgrundstruktur 18a, insbesondere relativ zu der Befestigungsschiene 14a, zuzulassen. Die Sitzfußeinheit 28a ist dazu vorgesehen, die zumindest eine Ausgleichsbewegung zwischen der Sitzgrundstruktur 18a und dem Kabinenboden 12a zerstörungsfrei zuzulassen. Die von der Sitzfußeinheit 28a zugelassene Ausgleichsbewegung ist begrenzt. Die zumindest eine Ausgleichsbewegung ist im vorliegenden Fall als eine Linearbewegung ausgebildet.

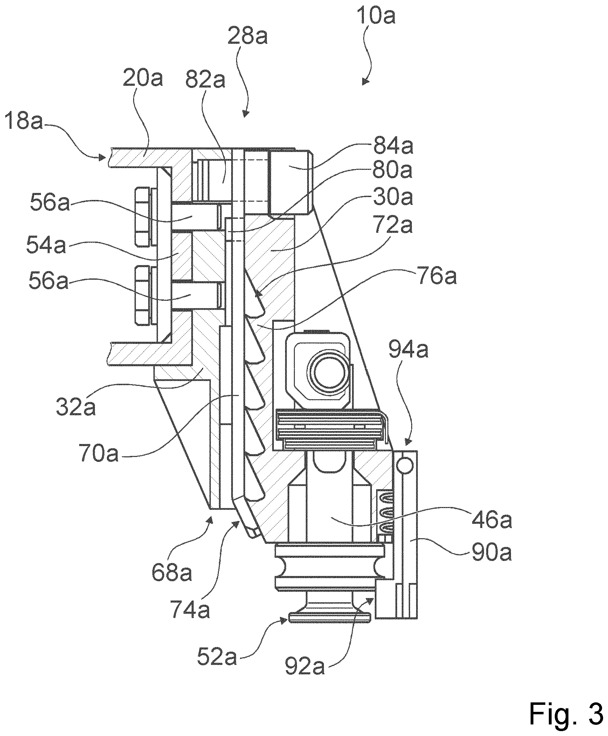

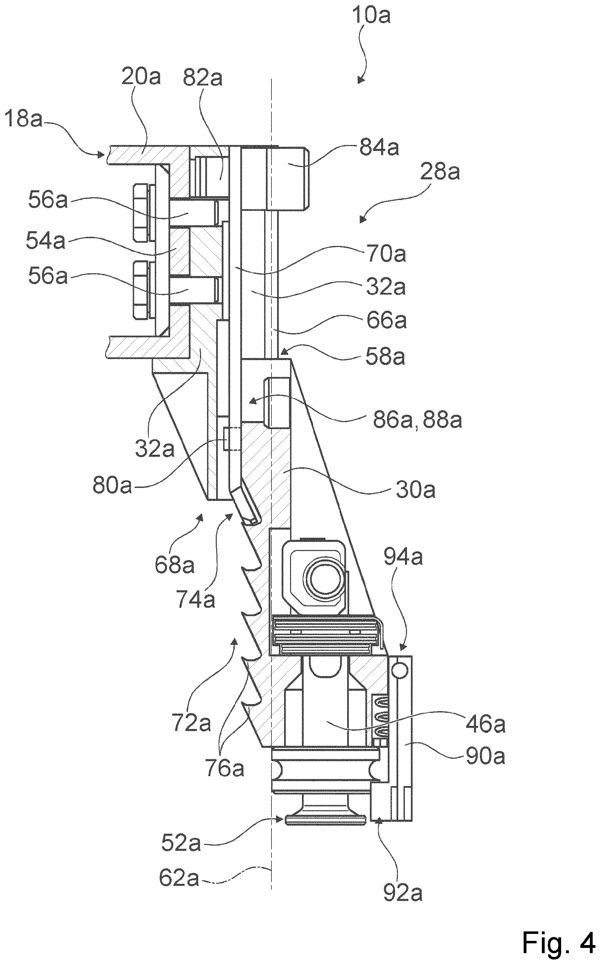

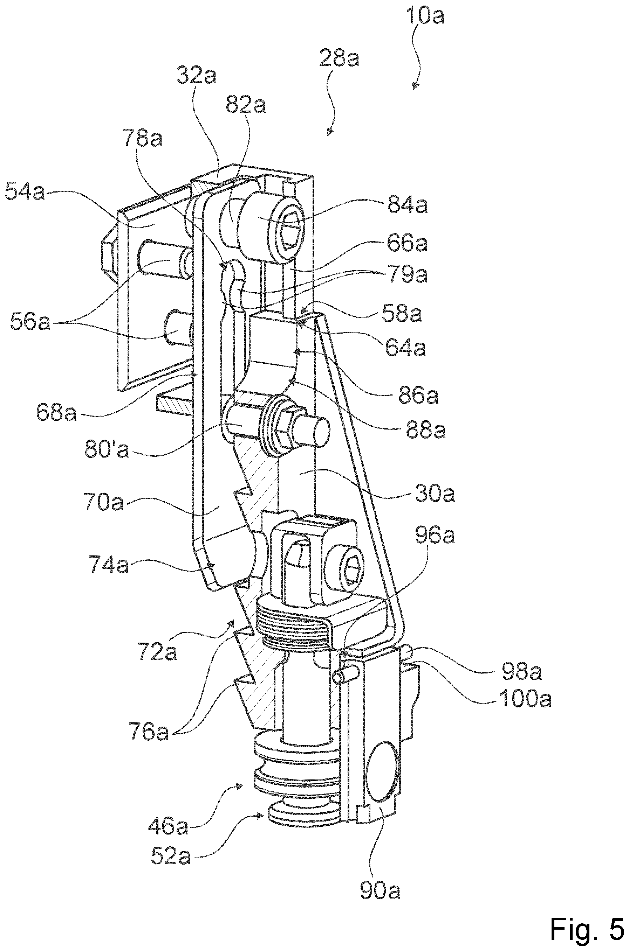

In den Figuren 2 und 3 ist die Sitzfußeinheit 28a in einer Normalstellung gezeigt, in der sich der Ausgleichsgrundkörper 32a in einem Normalbetriebszustand relativ zu dem Anbindungsgrundkörper 30a befindet. In den Figuren 4 und 5 ist die Sitzfußeinheit 28a in einer Ausgleichsstellung gezeigt, in der der Ausgleichsgrundkörper 32a aus der Normalstellung, insbesondere durch die zumindest eine Ausgleichsbewegung, relativ zu dem Anbindungsgrundkörper 30a maximal verschoben ist.

In der Figur 2 ist die Flugzeugsitzbefestigungsvorrichtung 10a in einer Stellung gezeigt, in der die Flugzeugsitzbefestigungsvorrichtung 10a zu einer Kopplung mit der Befestigungsschiene 14a positioniert, aber noch nicht in diese eingeführt ist. Die Flugzeugsitzbefestigungsvorrichtung 10a weist ein Fittingelement 46a auf. Das Fittingelement 46a ist dazu vorgesehen, mit der Befestigungsschiene 14a gekoppelt zu werden. In einem vollständig montierten Zustand ist das Fittingelement 46a in einer Ausnehmung in dem Kabinenboden 12a, insbesondere in der Befestigungsschiene 14a, gehalten.

Die Befestigungsschiene 14a bildet ein Hohlprofil aus, das zu einer formschlüssigen Verbindung mit dem Fittingelement 46a vorgesehen ist. Die Befestigungsschiene 14a weist auf ihrer Oberseite eine Führungsöffnung 48a auf, durch die in einem montierten Zustand zumindest ein Teil des Fittingelements 46a geführt ist. Die Befestigungsschiene 14a weist in zumindest im Wesentlichen gleichen Abständen, Montagebereiche 50a auf, in denen die Führungsöffnung 48a jeweils einen breiteren Querschnitt aufweist. Die Führungsöffnung 48a ist in den Montagebereichen 50a im Wesentlichen kreisrund ausgebildet. Die Montagebereiche 50a sind zu einer Einführung eines Halteabschnitts 52a des Fittingelements 46a durch einen der Montagebereiche 50a in die Befestigungsschiene 14a zur Herstellung einer formschlüssigen Verbindung mit der Befestigungsschiene 14a vorgesehen.

Grundsätzlich kann das Fittingelement 46a in einem begrenzten Winkelbereich schwenkbar um eine Achse, die parallel zu einer Aufständerebene ausgerichtet und insbesondere auf Höhe der Führungsöffnung 48a angeordnet ist, bewegbar sein. Dadurch kann eine vorteilhaft spannungsfreie Verschwenkung der Sitzgrundstruktur 18a bei einer Ausgleichsbewegung erreicht werden. Der begrenzte Winkelbereich erstreckt sich ausgehend von einer Normalen auf der Aufständerebene um vorzugsweise höchstens 20 Grad und besonders bevorzugt um höchstens 10 Grad. Die Aufständerebene wird von dem Kabinenboden 12a ausgebildet.

Der Anbindungsgrundkörper 30a ist mit dem Fittingelement 46a verbunden. Das Fittingelement 46a ist kraftschlüssig und/oder formschlüssig mit dem Anbindungsgrundkörper 30a verbunden. Das Fittingelement 46a ist fest, insbesondere starr, mit dem Anbindungsgrundkörper 30a verbunden. Der Anbindungsgrundkörper 30a ist dazu vorgesehen, die Sitzfußeinheit 28a über das Fittingelement 46a an die Befestigungsschiene 14a anzubinden.

Der Ausgleichsgrundkörper 32a ist in jedem Betriebszustand starr mit der Sitzgrundstruktur 18a verbunden. Der Ausgleichsgrundkörper 32a ist dazu vorgesehen, die Sitzfußeinheit 28a mit der Sitzgrundstruktur 18a zu verbinden. Der Ausgleichsgrundkörper 32a ist kraftschlüssig und formschlüssig mit der Sitzgrundstruktur 18a verbunden. Die Flugzeugsitzbefestigungsvorrichtung 10a weist eine Befestigungsplatte 54a auf. Die Befestigungsplatte 54a ist auf einer dem Ausgleichsgrundkörper 32a abgewandten Seite eines Trägerelements 20a der Sitzgrundstruktur 18a angeordnet. Die Befestigungsplatte 54a ist dazu vorgesehen, den Ausgleichsgrundkörper 32a über einen Großteil einer Höhe des Trägerelements 20a der Sitzgrundstruktur 18a an das Trägerelement 20a anzupressen. Die Flugzeugsitzbefestigungsvorrichtung 10a weist mehrere als Schrauben ausgebildete Befestigungsmittel 56a auf, die dazu vorgesehen sind, den Ausgleichsgrundkörper 32a fest mit der Sitzgrundstruktur 18a zu verbinden. Das Trägerelement 20a der Sitzgrundstruktur 18a ist in einem montierten Zustand formschlüssig zwischen der Befestigungsplatte 54a und dem Ausgleichsgrundkörper 32a angeordnet. Der Ausgleichsgrundkörper 32a ist dazu vorgesehen, in dem Überlastfall die zumindest eine Ausgleichsbewegung relativ zu der Befestigungsschiene 14a auszuführen. Der Ausgleichsgrundkörper 32a ist dazu vorgesehen, in dem Überlastfall die zumindest eine Ausgleichsbewegung relativ zu dem Kabinenboden 12a auszuführen.

Der Ausgleichsgrundkörper 32a ist im vorliegenden Fall translatorisch verschiebbar zu dem Anbindungsgrundkörper 30a gelagert. Der Anbindungsgrundkörper 30a und der Ausgleichsgrundkörper 32a sind im vorliegenden Fall über zwei Schienenverbindungen 58a, 60a miteinander gekoppelt. Die zwei Schienenverbindungen 58a, 60a sind räumlich getrennt voneinander ausgebildet. Die Sitzfußeinheit 28a weist die zwei Schienenverbindungen 58a, 60a auf. Der Anbindungsgrundkörper 30a und der Ausgleichsgrundkörper 32a sind über die zwei Schienenverbindungen 58a, 60a entlang einer Führungsbahn 62a beweglich zueinander, insbesondere gleitend aneinander, gelagert. Der Ausgleichsgrundkörper 32a und der Anbindungsgrundkörper 30a sind gleitend aneinander gelagert. Die Schienenverbindungen 58a, 60a der Sitzfußeinheit 28a sind jeweils als ein Gleitlager ausgebildet. Der Anbindungsgrundkörper 30a und der Ausgleichsgrundkörper 32a sind jeweils zumindest im Wesentlichen aus einem metallischen Werkstoff, insbesondere Stahl, gebildet. Der Anbindungsgrundkörper 30a und der Ausgleichsgrundkörper 32a sind jeweils, insbesondere zumindest in einem Bereich der Schienenverbindungen 58a, 60a, oberflächenbehandelt, insbesondere chromatiert. Dadurch kann ein, insbesondere korrosionsbedingtes, Festsetzen von Anbindungsgrundkörper 30a und Ausgleichsgrundkörper 32a aneinander vorteilhaft vermieden und somit eine Betriebssicherheit erhöht werden.

Der Anbindungsgrundkörper 30a weist zwei längliche Nuten 64a auf. Der Ausgleichsgrundkörper 32a weist zwei längliche Fortsätze 66a auf. Je eine der Nuten 64a und je einer der Fortsätze 66a bilden gepaart eine der Schienenverbindungen 58a, 60a aus. Jede der Schienenverbindungen 58a, 60a weist eine der Nuten 64a und einen der Fortsätze 66a auf. Der Fortsatz 66a ist korrespondierend zu der Nut 64a ausgebildet. Der Fortsatz 66a greift in die Nut 64a ein. Der Fortsatz 66a ist gleitend in der Nut 64a gelagert.

Der Fortsatz 66a ist in einem gekoppelten Zustand des Anbindungsgrundkörpers 30a und des Ausgleichsgrundkörpers 32a zumindest teilweise in der Nut 64a angeordnet, insbesondere in der Normalstellung und in der Ausgleichsstellung der Sitzfußeinheit 28a. Die Schienenverbindungen 58a, 60a sind über eine Symmetrieebene der Sitzfußeinheit 28a, welche zumindest im Wesentlichen senkrecht zu der Aufständerebene ausgerichtet ist, gespiegelt zueinander ausgebildet.

Die zwei Schienenverbindungen 58a, 60a sind derart angeordnet, dass sie den Anbindungsgrundkörper 30a und den Ausgleichsgrundkörper 32a in zwei translatorischen Freiheitsgraden formschlüssig koppeln. Die Fortsätze 66a der Schienenverbindungen 58a, 60a sind jeweils an gegenüberliegenden Innenseiten des Ausgleichsgrundkörpers 32a angeordnet. Die Nuten 64a der Schienenverbindungen 58a, 60a sind jeweils an voneinander abgewandten Außenseiten des Anbindungsgrundkörpers 30a angeordnet. In einer alternativen Ausgestaltung wäre es auch denkbar, dass der Ausgleichsgrundkörper 32a die zwei Nuten 64a und der Anbindungsgrundkörper 30a die zwei Fortsätze 66a aufweist. Im vorliegenden Fall weist die Nut 64a einen zumindest im Wesentlichen rechteckigen Querschnitt auf. Im vorliegenden Fall weist der Fortsatz 66a einen zumindest im Wesentlichen rechteckigen Querschnitt auf. Grundsätzlich können die Nut 64a und der Fortsatz 66a jedoch auch eine andere dem Fachmann für geeignet erscheinende Form aufweisen, wobei eine Nut und ein Fortsatz eine zueinander korrespondierende Form aufweisen müssen. Dabei ist es denkbar, dass die Nut und der Fortsatz über eine Hinterschneidung der Nut und/oder des Fortsatzes in einer Querschnittsebene betrachtet, insbesondere in zwei translatorischen Freiheitsgraden, formschlüssig miteinander gekoppelt sind. Beispielsweise könnte die Nut einen T-förmigen Querschnitt aufweisen, wobei der Fortsatz einen T-förmigen Querschnitt aufweist und in der Nut angeordnet ist. Grundsätzlich wäre es auch denkbar, dass lediglich eine Schienenverbindung zu einer Kopplung des Ausgleichsgrundkörpers 32a mit dem Anbindungsgrundkörper 30a vorgesehen ist, insbesondere bei einer formschlüssigen Kopplung der Nut und des Fortsatzes in einer Querschnittsebene.

Die Führungsbahn 62a beschreibt im vorliegenden Fall eine Gerade. Grundsätzlich wäre es jedoch denkbar, dass die Führungsbahn 62a einen Kreisbogenabschnitt beschreibt. Die Führungsbahn 62a ist in einer Ebene angeordnet. Die Ebene, in der die Führungsbahn 62a angeordnet ist, ist senkrecht zu dem Kabinenboden 12a ausgerichtet.

Die Ebene, in der die Führungsbahn 62a angeordnet ist, ist parallel zu der Haupterstreckungsachse der Befestigungsschiene 14a ausgerichtet.

Haupterstreckungsbahnen der Schienenverbindungen 58a, 60a sind jeweils zumindest im Wesentlichen senkrecht zu der Aufständerebene ausgerichtet. Im vorliegenden Fall sind die Haupterstreckungsbahnen der Schienenverbindungen 58a, 60a als Haupterstreckungsachsen ausgebildet. Die Haupterstreckungsbahnen der Schienenverbindungen 58a, 60a verlaufen jeweils an einer Stirnfläche des Fortsatzes 66a der Schienenverbindungen 58a, 60a. Die Haupterstreckungsbahnen der Schienenverbindungen 58a, 60a verlaufen im vorliegenden Fall jeweils parallel zu einer Haupterstreckungsachse der Nut 64a der Schienenverbindungen 58a, 60a. Die Haupterstreckungsbahnen der Schienenverbindungen 58a, 60a verlaufen jeweils parallel zu einer Haupterstreckungsachse des Fortsatzes 66a der Schienenverbindungen 58a, 60a. Die Haupterstreckungsbahnen der Schienenverbindungen 58a, 60a sind in parallel zueinander angeordneten Ebenen angeordnet, wobei die Haupterstreckungsbahnen senkrecht zu den Ebenen betrachtet deckungsgleich sind. Die Haupterstreckungsbahnen der Schienenverbindungen 58a, 60a und die Führungsbahn 62a sind in einer Projektionsebene deckungsgleich (vgl. Figur 4).

Eine seitliche Oberfläche des Anbindungsgrundkörpers 30a und eine seitliche Oberfläche des Ausgleichsgrundkörpers 32a bilden zumindest in der Normalstellung eine bündige Fläche aus.

Die Sitzfußeinheit 28a weist eine Arretiereinheit 68a auf. Die Arretiereinheit 68a ist dazu vorgesehen, eine Bewegung der Sitzgrundstruktur 18a in zumindest einer Richtung zu blockieren und/oder zu begrenzen. Die zumindest eine Richtung ist zumindest im Wesentlichen senkrecht zu der Aufständerebene ausgerichtet. Die Arretiereinheit 68a ist dazu vorgesehen, die zumindest eine Ausgleichsbewegung der Sitzgrundstruktur 18a in zumindest einer Richtung zu blockieren und/oder zu begrenzen. Die Arretiereinheit 68a ist dazu vorgesehen, eine Ausgleichsbewegung der Sitzgrundstruktur 18a in einer Richtung, die von der Aufständerebene, insbesondere von dem Kabinenboden 12a, weggerichtet ist, zu begrenzen. Die Arretiereinheit 68a ist dazu vorgesehen, eine Ausgleichsbewegung der Sitzgrundstruktur 18a in einer Richtung, die zu der Aufständerebene, insbesondere zu dem Kabinenboden 12a, hinwärts gerichtet ist, zu blockieren.

Die Arretiereinheit 68a umfasst ein Formschlusselement 70a. Das Formschlusselement 70a ist als eine Blattfeder ausgebildet. Die Blattfeder ist im vorliegenden Fall aus einem Federstahl gebildet. Das Formschlusselement 70a ist dazu vorgesehen, in eine korrespondierende Raststruktur 72a des Anbindungsgrundkörpers 30a einzugreifen. Die Raststruktur 72a des Anbindungsgrundkörpers 30a ist der Teil der Arretiereinheit 68a. Das Formschlusselement 70a ist plattenförmig ausgebildet. Das Formschlusselement 70a weist einen Rastbereich 74a auf, der dazu vorgesehen ist, die korrespondierende Raststruktur 72a des Anbindungsgrundkörpers 30a zu kontaktieren. Das Formschlusselement 70a ist in dem Rastbereich 74a, insbesondere gegenüber einem Großteil des Formschlusselements 70a, abgewinkelt ausgebildet. Eine Haupterstreckungsachse des Formschlusselements 70a ist zumindest im Wesentlichen senkrecht zu der Aufständerebene ausgerichtet. Die Raststruktur 72a des Anbindungsgrundkörpers 30a weist im vorliegenden Fall mehrere identisch ausgebildete, keilförmige Fortsätze 76a auf. Die Fortsätze 76a der Raststruktur 72a sind entlang einer zumindest im Wesentlichen senkrecht zu der Aufständerebene ausgerichteten Achse angeordnet. Die Raststruktur 72a des Anbindungsgrundkörpers 30a ist dazu vorgesehen, in einer Richtung weg von der Aufständerebene ein Vorbeigleiten des Formschlusselements 70a zu ermöglichen. Die Raststruktur 72a des Anbindungsgrundkörpers 30a ist dazu vorgesehen, in einer Richtung hin zu der Aufständerebene eine Bewegung des Formschlusselements 70a zu blockieren. Das Formschlusselement 70a weist eine Nut 78a auf. Eine Haupterstreckungsbahn der Nut 78a des Formschlusselements 70a ist zumindest im Wesentlichen parallel zu den Haupterstreckungsbahnen der Schienenverbindungen 58a, 60a ausgerichtet. Die Nut 78a des Formschlusselements 70a ist als ein Langloch ausgebildet. Die Nut 78a des Formschlusselements 70a ist im vorliegenden Fall als ein Durchgangsloch ausgebildet. Die Nut 78a des Formschlusselements 70a erstreckt sich nicht bis in den abgewinkelten Rastbereich 74a des Formschlusselements 70a.

Die Arretiereinheit 68a umfasst ein Anschlagelement 80a. Das Anschlagelement 80a ist fest mit dem Anbindungsgrundkörper 30a verbunden. Das Anschlagelement 80a ist in der Nut 78a des Formschlusselements 70a geführt. Das Anschlagelement 80a ist dazu vorgesehen, eine Verschiebung der Sitzgrundstruktur 18a, insbesondere eine Verschiebung des Ausgleichsgrundkörpers 32a zu dem Anbindungsgrundkörper 30a, zu begrenzen. Die Nut 78a des Formschlusselements 70a ist dazu vorgesehen, eine maximale Verschiebung des Ausgleichsgrundkörpers 32a zu dem Anbindungsgrundkörper 30a zu begrenzen. Das Anschlagelement 80a ist in der Nut 78a des Formschlusselements 70a geführt. Das Anschlagelement 80a ragt in die Nut 78a des Formschlusselements 70a hinein. Das Anschlagelement 80a ist zylinderförmig ausgebildet. Das Anschlagelement 80a ist im vorliegenden Fall stoffschlüssig mit dem Anbindungsgrundkörper 30a verbunden. Das Anschlagelement 80a ist als ein Fortsatz des Anbindungsgrundkörpers 30a ausgebildet (vgl. Figuren 3 und 4). Der Fortsatz kann beispielsweise durch eine Fräsung an dem Anbindungsgrundkörper 30a hergestellt sein. Alternativ kann ein Anschlagelement 80'a der Arretiereinheit 68a in den Anbindungsgrundkörper 30a eingeschraubt sein. Diese alternative Ausgestaltung des Anschlagelements 80'a ist in der Figur 5 gezeigt. Das Anschlagelement 80'a ist in diesem Fall als ein Bolzen oder als eine Schraube ausgebildet.

Im vorliegenden Fall umfasst das Formschlusselement 70a zwei Deformationselemente 79a. Das Formschlusselement 70a ist dazu vorgesehen, bei einer Ausgleichsbewegung zumindest bereichsweise plastisch deformiert zu werden. deformiert wird Die Deformationselemente 79a sind dazu vorgesehen, sich zu verformen, um eine Bewegung des Anschlagelements 80a, 80'a durch die Nut 78a zuzulassen. Die Deformationselemente 79a sind jeweils als eine Erhebung ausgebildet, die sich von gegenüberliegenden Innenseiten der Nut 78a aufeinander zu erheben. Die Deformationselemente 79a verengen die Nut 78a in einem Bereich, in dem die Deformationselemente 79a angeordnet sind. Bei einer Belastung des Ausgleichsgrundkörpers 32a in einer Richtung, die von der Aufständerebene, insbesondere von dem Kabinenboden 12a, weggerichtet ist, wird das Anschlagelement 80a, 80'a gegen die Deformationselemente 79a gedrückt, wobei die Deformationselemente 79a ab einer definierten Kraft, die insbesondere größer als eine definierte Handholdlast ist, plastisch verformt werden. Alternativ ist es jedoch auch vorstellbar, dass die Deformationselemente 79a elastisch ausgelenkt werden, wenn die definierte Kraft erreicht ist, und insbesondere nicht plastisch deformiert werden. Die definierte Kraft ist im Überlastfall erreicht. Die definierte Kraft ist größer als eine Handholdlast, bei der Abstützkräfte von einer Person auf die Flugzeugsitzvorrichtung, auf den Flugzeugsitz und/oder auf die Sitzgrundstruktur 18a wirken. In der Normalstellung der Sitzfußeinheit 28a ist das Anschlagelement 80a, 80'a in der Nut 78a mittels den Deformationselementen 79a fixiert. Ab der definierten Kraft scheren die Deformationselemente 79a ab und/oder werden aus der Nut 78a herausgepresst. Durch eine Deformation der Deformationselemente 79a kann das Anschlagelement 80a, 80'a innerhalb der gesamten Nut 78a bewegt werden, wodurch eine Ausgleichsbewegung des Ausgleichsgrundkörpers 32a zu dem Anbindungsgrundkörper 30a ermöglicht wird.

Das Formschlusselement 70a ist mittels eines Befestigungselements 82a der Arretiereinheit 68a formschlüssig und kraftschlüssig mit dem Ausgleichsgrundkörper 32a verbunden. Eine Haupterstreckungsachse des Befestigungselements 82a ist zumindest im Wesentlichen parallel zu der Aufständerebene ausgerichtet. Das Befestigungselement 82a ist als eine Schraube ausgebildet. Das Befestigungselement 82a weist einen Zylinderkopf 84a auf. Der Zylinderkopf 84a ist außenliegend an dem Ausgleichsgrundkörper 32a angeordnet.

Der Anbindungsgrundkörper 30a weist eine Ausnehmung 86a auf. Die Ausnehmung 86a des Anbindungsgrundkörpers 30a ist dazu vorgesehen, das Befestigungselement 82a der Arretiereinheit 68a teilweise aufzunehmen. Der Anbindungsgrundkörper 30a weist einen Anschlagbereich 88a auf. Der Anschlagbereich 88a ist in der Ausnehmung 86a des Anbindungsgrundkörpers 30a angeordnet. Die Ausnehmung 86a ist in dem Anschlagbereich 88a gerundet, insbesondere halbkreisförmig, ausgebildet. Das Befestigungselement 82a ist in der Normalstellung der Sitzfußeinheit 28a teilweise in dem Anschlagbereich 88a angeordnet. Das Befestigungselement 82a ist dazu vorgesehen, in dem Überlastfall aus der Ausnehmung 86a herausbewegt zu werden. Das Befestigungselement 82a, insbesondere der Zylinderkopf 84a des Befestigungselements 82a, ist dazu vorgesehen, in dem Anschlagbereich 88a gegen den Anbindungsgrundkörper 30a anzuschlagen. Der Anschlagbereich 88a ist dazu vorgesehen, eine Bewegung des Ausgleichsgrundkörpers 32a in einer Richtung zu der Aufständerebene hin zu begrenzen.

Die Flugzeugsitzbefestigungsvorrichtung 10a weist ein Fittingverriegelungselement 90a auf. Das Fittingverriegelungselement 90a ist als ein Riegel ausgebildet. Das Fittingverriegelungselement 90a ist dazu vorgesehen, das Fittingelement 46a in der Befestigungsschiene 14a zu verriegeln. Das Fittingverriegelungselement 90a ist dazu vorgesehen, das Fittingelement 46a, insbesondere den Halteabschnitt 52a des Fittingelements 46a, entlang der Haupterstreckungsachse der Befestigungsschiene 14a zu blockieren. Das Fittingverriegelungselement 90a ist in einer versenkten Stellung des Fittingverriegelungselements 90a in der Führungsöffnung 48a der Befestigungsschiene 14a angeordnet. Das Fittingverriegelungselement 90a ist in der versenkten Stellung in einem der Montagebereiche 50a der Befestigungsschiene 14a angeordnet. Das Fittingverriegelungselement 90a bildet in der in die Befestigungsschiene 14a versenkten Stellung einen Formschluss entlang der Haupterstreckungsachse der Befestigungsschiene 14a aus. Das Fittingverriegelungselement 90a bildet auf einer dem Fittingelement 46a zugewandten Seite des Fittingverriegelungselements 90a einen Aufnahmebereich 92a aus, der korrespondierend zu einer Form des Fittingelements 46a in dem Halteabschnitt 52a ausgeformt ist.

Das Fittingverriegelungselement 90a ist teilweise in die Befestigungsschiene 14a versenkbar. Das Fittingverriegelungselement 90a ist dazu vorgesehen, bei einer Verriegelung des Fittingelements 46a mit der Befestigungsschiene 14a in die Befestigungsschiene 14a, insbesondere in das von der Befestigungsschiene 14a ausgebildete Hohlprofil, eingeschoben zu werden. Das Fittingverriegelungselement 90a ist translatorisch beweglich an dem Anbindungsgrundkörper 30a gelagert. Das Fittingverriegelungselement 90a ist entlang einer Bewegungsachse des Fittingverriegelungselements 90a translatorisch beweglich an dem Anbindungsgrundkörper 30a gelagert. Die Bewegungsachse des Fittingverriegelungselements 90a ist zumindest im Wesentlichen senkrecht zu der Haupterstreckungsachse der Befestigungsschiene 14a ausgerichtet. Das Fittingverriegelungselement 90a und der Anbindungsgrundkörper 30a sind über zwei weitere Schienenverbindungen 94a, 96a miteinander gekoppelt. Das Fittingverriegelungselement 90a ist mittels der zwei weiteren Schienenverbindungen 94a, 96a versenkbar ausgebildet. Das Fittingverriegelungselement 90a ist gleitend an dem Anbindungsgrundkörper 30a gelagert. Das Fittingverriegelungselement 90a ist über die weiteren Schienenverbindungen 94a, 96a entlang der Bewegungsachse des Fittingverriegelungselements 90a beweglich gelagert.

Das Fittingverriegelungselement 90a weist in einem oberen Bereich des Fittingverriegelungselements 90a zwei Fortsätze 98a auf, die sich auf voneinander abgewandten Seiten des Fittingverriegelungselements 90a von dem Fittingverriegelungselement 90a weg erstrecken. Die Fortsätze 98a des Fittingverriegelungselements 90a sind dazu vorgesehen, eine Bewegung des Fittingverriegelungselements 90a in Richtung der Aufständerebene zu begrenzen. In der versenkten Stellung liegen die Fortsätze 98a jeweils auf Vorsprüngen 100a des Anbindungsgrundkörpers 30a auf. Im vorliegenden Fall sind die Fortsätze 98a von einem Stiftelement gebildet, das mit dem Fittingverriegelungselement 90a verbunden ist. Die Fortsätze 98a des Fittingverriegelungselements 90a weisen eine gemeinsame Haupterstreckungsachse auf. Die Haupterstreckungsachse der Fortsätze 98a des Fittingverriegelungselements 90a ist zumindest im Wesentlichen parallel zu der Aufständerebene ausgerichtet. Die Haupterstreckungsachse der Fortsätze 98a des Fittingverriegelungselements 90a ist zumindest im Wesentlichen senkrecht zu der Haupterstreckungsachse der Befestigungsschiene 14a ausgerichtet.

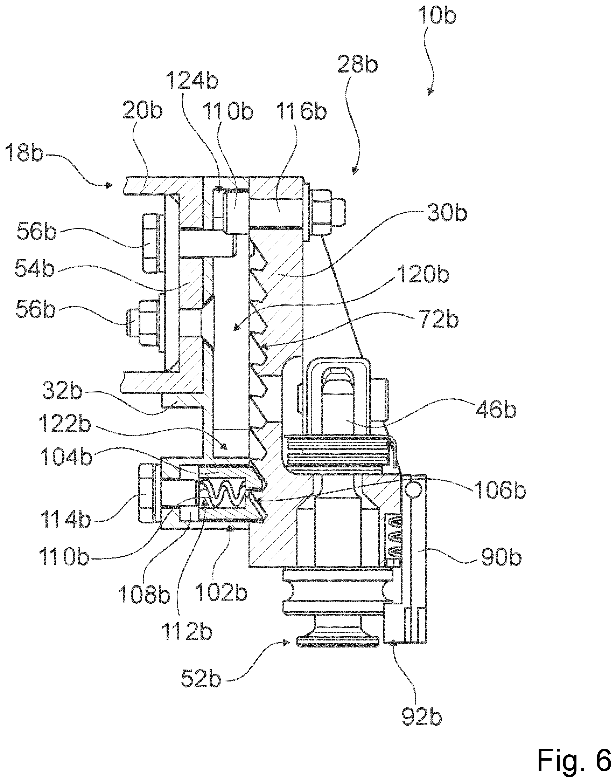

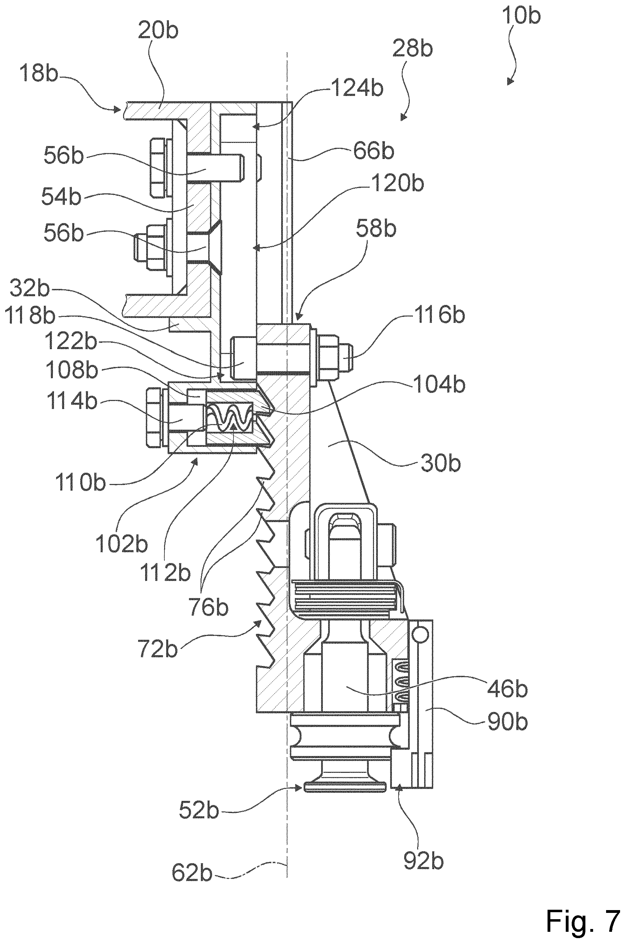

In den Figuren 6 und 7 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 5, verwiesen werden kann. Zur Unterscheidung der Ausführungsbeispiele ist der Buchstabe a den Bezugszeichen des Ausführungsbeispiels in den Figuren 1 bis 5 nachgestellt. In dem Ausführungsbeispiel der Figuren 6 und 7 ist der Buchstabe a durch den Buchstaben b ersetzt.

In den Figuren 6 und 7 ist eine Flugzeugsitzbefestigungsvorrichtung 10b in einem zweiten Ausführungsbeispiel gezeigt. Die Figur 1 ist grundsätzlich auch für das zweite Ausführungsbeispiel gültig. Die Flugzeugsitzbefestigungsvorrichtung 10b ist dazu vorgesehen, einen nicht näher dargestellten Flugzeugsitz auf einem Kabinenboden eines Flugzeugs aufzuständern. Die Flugzeugsitzbefestigungsvorrichtung 10b ist zur Befestigung wenigstens eines Teils des Flugzeugsitzes an einer, an einer Flugzeugstruktur befestigten Befestigungsschiene vorgesehen. Die Flugzeugsitzbefestigungsvorrichtung 10b weist eine Sitzgrundstruktur 18b auf. Die Sitzgrundstruktur 18b weist mehrere miteinander verbundene Trägerelemente 20b auf. Die Flugzeugsitzbefestigungsvorrichtung 10b weist eine Sitzfußeinheit 28b auf. Die Sitzfußeinheit 28b umfasst einen Anbindungsgrundkörper 30b. Die Sitzfußeinheit 28b umfasst einen Ausgleichsgrundkörper 32b. In der Figur 6 ist die Sitzfußeinheit 28b in einer Normalstellung gezeigt, in der sich der Ausgleichsgrundkörper 32b in einem Normalbetriebszustand relativ zu dem Anbindungsgrundkörper 30b befindet. In der Figur 7 ist die Sitzfußeinheit 28b in einer Ausgleichsstellung gezeigt, in der der Ausgleichsgrundkörper 32b aus der Normalstellung, insbesondere durch die zumindest eine Ausgleichsbewegung, relativ zu dem Anbindungsgrundkörper 30b maximal verschoben ist. Die Flugzeugsitzbefestigungsvorrichtung 10b weist ein Fittingelement 46b auf. Die Flugzeugsitzbefestigungsvorrichtung 10b weist eine Befestigungsplatte 54b auf. Die Flugzeugsitzbefestigungsvorrichtung 10b weist mehrere als Schrauben oder Bolzen ausgebildete Befestigungsmittel 56b auf, die dazu vorgesehen sind, den Ausgleichsgrundkörper 32b fest mit der Sitzgrundstruktur 18b zu verbinden. Der Anbindungsgrundkörper 30b und der Ausgleichsgrundkörper 32b sind im vorliegenden Fall über zwei Schienenverbindungen 58b miteinander gekoppelt, wobei in den Figuren 6 und 7 lediglich eine der zwei Schienenverbindungen 58b sichtbar ist. Der Anbindungsgrundkörper 30b und der Ausgleichsgrundkörper 32b sind über die zwei Schienenverbindungen 58b entlang einer Führungsbahn 62b beweglich zueinander, insbesondere gleitend aneinander, gelagert. Jede der Schienenverbindungen 58b weist eine in den Figuren 6 und 7 nicht sichtbare Nut auf, die in dem Anbindungsgrundkörper 30b angeordnet ist. Jede der Schienenverbindungen 58b weist einen Fortsatz 66b auf, der an dem Ausgleichsgrundkörper 32b angeordnet ist. Die Flugzeugsitzbefestigungsvorrichtung 10b weist ein Fittingverriegelungselement 90b auf. Das Fittingverriegelungselement 90b und der Anbindungsgrundkörper 30b sind über zwei nicht näher dargestellte weitere Schienenverbindungen miteinander gekoppelt. Das Fittingverriegelungselement 90b bildet auf einer dem Fittingelement 46b zugewandten Seite des Fittingverriegelungselements 90b einen Aufnahmebereich 92b aus, der korrespondierend zu einer Form des Fittingelements 46b in dem Haltebereich 52b ausgeformt ist. Eine Ausgestaltung des Fittingverriegelungselements 90b und einer Anbindung des Fittingverriegelungselements 90b an den Anbindungsgrundkörper 30b entspricht der Ausgestaltung aus dem ersten Ausführungsbeispiel.

Die Sitzfußeinheit 28b weist eine Arretiereinheit 102b auf. Im Unterschied zu der Arretiereinheit 68a aus dem ersten Ausführungsbeispiel ist die Arretiereinheit 102b aus dem zweiten Ausführungsbeispiel abweichend ausgebildet. Die Arretiereinheit 102b ist dazu vorgesehen, eine Bewegung der Sitzgrundstruktur 18b in zumindest einer Richtung zu blockieren und/oder zu begrenzen.

Die Arretiereinheit 102b umfasst ein Formschlusselement 104b. Das Formschlusselement 104b ist dazu vorgesehen, in eine korrespondierende Raststruktur 72b des Anbindungsgrundkörpers 30b einzugreifen. Das Formschlusselement 104b ist translatorisch beweglich zu dem Ausgleichsgrundkörper 32b gelagert. Das Formschlusselement 104b weist eine Raststruktur 106b auf. Das Formschlusselement 104b weist im vorliegenden Fall zwei keilförmige Fortsätze auf, die die Raststruktur 106b des Formschlusselements 104b ausbilden und die korrespondierend zu der Raststruktur 72b des Anbindungsgrundkörpers 30b ausgebildet sind. Das Formschlusselement 104b ist zumindest teilweise in dem Ausgleichsgrundkörper 32b gelagert.

Eine Bewegungsachse des Formschlusselements 104b ist zumindest im Wesentlichen parallel zu der Aufständerebene ausgerichtet. Die Bewegungsachse des Formschlusselements 104b ist zumindest im Wesentlichen senkrecht zu der Führungsbahn 62b der Schienenverbindungen 58b ausgerichtet. Der Ausgleichsgrundkörper 32b weist eine Ausnehmung 108b auf, in der das Formschlusselement 104b gelagert ist. Das Formschlusselement 104b ist gleitend in der Ausnehmung 108b des Ausgleichsgrundkörpers 32b gelagert. Das Formschlusselement 104b ist dazu vorgesehen, bei der Ausgleichsbewegung entlang der Bewegungsachse des Formschlusselements 104b, insbesondere in die Ausnehmung 108b des Ausgleichsgrundkörpers 32b hinein, ausgelenkt zu werden.

Die Arretiereinheit 102b weist ein Federelement 110b auf. Das Federelement 110b ist zwischen dem Ausgleichsgrundkörper 32b und dem Formschlusselement 104b angeordnet und dazu vorgesehen, das Formschlusselement 104b gegen die korrespondierende Raststruktur 72b des Anbindungsgrundkörpers 30b zu drücken. Das Federelement 110b ist als eine Druckfeder ausgebildet. Das Federelement 110b ist in der Ausnehmung 108b des Ausgleichsgrundkörpers 32b angeordnet. Vorzugsweise ist eine Wirkachse des Federelements 110b parallel zu der Bewegungsachse des Formschlusselements 104b ausgerichtet. Das Formschlusselement 104b weist einen Hohlraum 112b auf, in dem das Federelement 110b angeordnet ist. Vorzugsweise weist die Arretiereinheit 102b ein Einstellmittel 114b auf, das dazu vorgesehen ist, das Federelement 110b, insbesondere gegen das Formschlusselement 104b, vorzuspannen. Das Einstellmittel 114b ist als eine Schraube oder als ein Bolzen ausgebildet. Das Einstellmittel 114b ist teilweise in der Ausnehmung 108b angeordnet. Das Einstellmittel 114b ist von einer der Ausnehmung 108b abgewandten Seite des Ausgleichsgrundkörpers 32b in den Ausgleichsgrundkörper 32b eingeschraubt.

Die Arretiereinheit 102b umfasst ein Anschlagelement 116b. Das Anschlagelement 116b ist fest mit dem Anbindungsgrundkörper 30b verbunden. Das Anschlagelement 116b ist im vorliegenden Fall kraftschlüssig und formschlüssig mit dem Anbindungsgrundkörper 30b verbunden. Das Anschlagelement 116b ist als eine Schraube oder als ein Bolzen ausgebildet. Das Anschlagelement 116b weist einen Zylinderkopf 118b auf. Der Zylinderkopf 118b ist außenliegend an dem Anbindungsgrundkörper 30b angeordnet. Der Zylinderkopf 118b ist dem Ausgleichsgrundkörper 32b zugewandt.

Der Ausgleichsgrundkörper 32b weist eine Nut 120b auf. Das Anschlagelement 116b ist in der Nut 120b des Ausgleichsgrundkörpers 32b geführt. Das Anschlagelement 116b ist dazu vorgesehen, eine Verschiebung der Sitzgrundstruktur 18b, insbesondere eine Verschiebung des Ausgleichsgrundkörpers 32b zu dem Anbindungsgrundkörper 30b, zu begrenzen. Die Nut 120b des Ausgleichsgrundkörpers 32b ist dazu vorgesehen, eine maximale Verschiebung des Ausgleichsgrundkörpers 32b zu dem Anbindungsgrundkörper 30b zu begrenzen. Das Anschlagelement 116b ist in der Nut 120b des Ausgleichsgrundkörpers 32b geführt. Das Anschlagelement 116b ragt in die Nut 120b des Ausgleichsgrundkörpers 32b hinein. Das Anschlagelement 116b ist zylinderförmig ausgebildet. Eine Haupterstreckungsachse des Anschlagelements 116b ist zumindest im Wesentlichen parallel zu der Aufständerebene ausgerichtet.

Der Ausgleichsgrundkörper 32b weist einen oberen Anschlagbereich 124b auf. Der obere Anschlagbereich 124b ist in der Nut 120b des Ausgleichsgrundkörpers 32b angeordnet. Die Nut 120b ist in dem oberen Anschlagbereich 124b gerundet, insbesondere halbkreisförmig, ausgebildet. Das Anschlagelement 116b ist in der Normalstellung der Sitzfußeinheit 28b in dem oberen Anschlagbereich 124b angeordnet.

Der Ausgleichsgrundkörper 32b weist einen unteren Anschlagbereich 122b auf. Der untere Anschlagbereich 122b ist in der Nut 120b des Ausgleichsgrundkörpers 32b angeordnet. Die Nut 120b ist in dem unteren Anschlagbereich 122b gerundet, insbesondere halbkreisförmig, ausgebildet. Das Anschlagelement 116b ist in der Ausgleichsstellung der Sitzfußeinheit 28b in dem unteren Anschlagbereich 122b angeordnet. Das Anschlagelement 116b, insbesondere der Zylinderkopf 118b des Anschlagelements 116b, ist in dem Überlastfall dazu vorgesehen, in dem unteren Anschlagbereich 122b gegen den Ausgleichsgrundkörper 32b anzuschlagen.

### Bezugszeichen

- 10: Flugzeugsitzbefestigungsvorrichtung
- 12: Kabinenboden
- 14: Befestigungsschiene
- 16: Befestigungsschiene
- 18: Sitzgrundstruktur
- 20: Trägerelement
- 22: Trägerelement
- 24: Trägerelement
- 26: Trägerelement
- 28: Sitzfußeinheit
- 30: Anbindungsgrundkörper
- 32: Ausgleichsgrundkörper
- 34: Sitzrichtung
- 36: Sitzfußeinheit
- 38: Schwenkachse
- 40: Sitzfußeinheit
- 42: Sitzfußeinheit
- 44: Schwenkachse
- 46: Fittingelement
- 48: Führungsöffnung
- 50: Montagebereich
- 52: Halteabschnitt
- 54: Befestigungsplatte
- 56: Befestigungsmittel
- 58: Schienenverbindung
- 60: Schienenverbindung
- 62: Führungsbahn
- 64: Nut
- 66: Fortsatz
- 68: Arretiereinheit
- 70: Formschlusselement
- 72: Raststruktur
- 74: Rastbereich
- 76: Fortsatz
- 78: Nut
- 79: Deformationselement
- 80: Anschlagelement
- 80': Anschlagelement
- 82: Befestigungselement
- 84: Zylinderkopf
- 86: Ausnehmung
- 88: Anschlagbereich
- 90: Fittingverriegelungselement
- 92: Aufnahmebereich
- 94: Schienenverbindung
- 96: Schienenverbindung
- 98: Fortsatz
- 100: Vorsprung
- 102: Arretiereinheit
- 104: Formschlusselement
- 106: Raststruktur
- 108: Ausnehmung
- 110: Federelement
- 112: Hohlraum
- 114: Einstellmittel
- 116: Anschlagelement
- 118: Zylinderkopf
- 120: Nut
- 122: Anschlagbereich
- 124: Anschlagbereich

## Patentansprüche

1. Flugzeugsitzbefestigungsvorrichtung (1 0a; 10b) zur Befestigung wenigstens eines Teils eines Flugzeugsitzes an zumindest einer, an einer Flugzeugstruktur befestigten Befestigungsschiene (14a, 16a), mit einer Sitzgrundstruktur (18a; 18b), mit zumindest einem Fittingelement (46a; 46b), das dazu vorgesehen ist, mit der Befestigungsschiene (14a, 16a) gekoppelt zu werden, und mit wenigstens einer Sitzfußeinheit (28a, 40a; 28b), die zumindest in einem Überlastfall dazu vorgesehen ist, zumindest eine Ausgleichsbewegung der Sitzgrundstruktur (18a; 18b), insbesondere relativ zu der Befestigungsschiene (14a, 16a), zuzulassen, **dadurch gekennzeichnet, dass** die wenigstens eine Sitzfußeinheit (28a, 40a; 28b) einen Anbindungsgrundkörper (30a; 30b), welcher mit dem Fittingelement (46a; 46b) verbunden ist, und einen Ausgleichsgrundkörper (32a; 32b), welcher in jedem Betriebszustand starr mit der Sitzgrundstruktur (18a; 18b) verbunden ist, aufweist, wobei der Anbindungsgrundkörper (30a; 30b) und der Ausgleichsgrundkörper (32a; 32b) über zumindest eine Schienenverbindung (58a, 60a) miteinander gekoppelt und entlang einer Führungsbahn (62a; 62b) beweglich zueinander gelagert sind.

2. Flugzeugsitzbefestigungsvorrichtung (10a; 10b) nach Anspruch 1, **dadurch gekennzeichnet, dass** eine Haupterstreckungsbahn der zumindest einen Schienenverbindung (58a, 60a) zumindest im Wesentlichen senkrecht zu einer Aufständerebene ausgerichtet ist.

3. Flugzeugsitzbefestigungsvorrichtung (10a; 10b) nach Anspruch 1 oder 2, **dadurch gekennzeichnet, dass** die Sitzfußeinheit (28a; 28b) zumindest eine Arretiereinheit (68a; 102b) aufweist, die dazu vorgesehen ist, eine Bewegung der Sitzgrundstruktur (18a; 18b) in zumindest einer Richtung zu blockieren und/oder zu begrenzen.

4. Flugzeugsitzbefestigungsvorrichtung (10a; 10b) nach Anspruch 3, **dadurch gekennzeichnet, dass** die Arretiereinheit (68a; 102b) zumindest ein Formschlusselement (70a; 104b) umfasst, das dazu vorgesehen ist, in eine korrespondierende Raststruktur (72a; 72b) des Anbindungsgrundkörpers (30a; 30b) einzugreifen.

5. Flugzeugsitzbefestigungsvorrichtung (10a) nach Anspruch 4, **dadurch gekennzeichnet, dass** das Formschlusselement (70a) zumindest teilweise als eine Blattfeder ausgebildet ist.

6. Flugzeugsitzbefestigungsvorrichtung (1 0a) nach Anspruch 4 oder 5, **dadurch gekennzeichnet, dass** das Formschlusselement (70a) mittels eines Befestigungselements (82a) der Arretiereinheit (68a) formschlüssig und/oder kraftschlüssig mit dem Ausgleichsgrundkörper (32a) verbunden ist.

7. Flugzeugsitzbefestigungsvorrichtung (1 0a) nach einem der Ansprüche 4 bis 6, **dadurch gekennzeichnet, dass** der Anbindungsgrundkörper (30a) eine Ausnehmung (86a) aufweist, die dazu vorgesehen ist, das Befestigungselement (82a) der Arretiereinheit (68a) zumindest teilweise aufzunehmen.

8. Flugzeugsitzbefestigungsvorrichtung (1 0a) nach einem der vorhergehenden Ansprüche, **dadurch gekennzeichnet, dass** das Formschlusselement (70a) eine Nut (78a) aufweist, deren Haupterstreckungsbahn zumindest im Wesentlichen parallel zu einer Haupterstreckungsbahn der zumindest einen Schienenverbindung (58a, 60a) ausgerichtet ist.

9. Flugzeugsitzbefestigungsvorrichtung (10a) nach Anspruch 8, **dadurch gekennzeichnet, dass** die Arretiereinheit (68a) ein Anschlagelement (80a) umfasst, das fest mit dem Anbindungsgrundkörper (30a) verbunden, in der Nut (78a) des Formschlusselements (70a) geführt und dazu vorgesehen ist, eine Verschiebung der Sitzgrundstruktur (18a), insbesondere eine Verschiebung des Ausgleichsgrundkörpers (32a) zu dem Anbindungsgrundkörper (30a), zu begrenzen.

10. Flugzeugsitzbefestigungsvorrichtung (10b) nach Anspruch 4, **dadurch gekennzeichnet, dass** das Formschlusselement (104b) translatorisch beweglich zu dem Ausgleichsgrundkörper (32b) gelagert ist.

11. Flugzeugsitzbefestigungsvorrichtung (1 0b) nach Anspruch 4 oder 10, **dadurch gekennzeichnet, dass** eine Bewegungsachse des Formschlusselements (104b) zumindest im Wesentlichen parallel zu einer Aufständerebene ausgerichtet ist.

12. Flugzeugsitzbefestigungsvorrichtung (1 0b) nach einem der Ansprüche 4, 10 oder 11, **dadurch gekennzeichnet, dass** die Arretiereinheit (102b) ein Federelement (110b) aufweist, das zwischen dem Ausgleichsgrundkörper (32b) und dem Formschlusselement (104b) angeordnet und dazu vorgesehen ist, das Formschlusselement (104b) gegen die korrespondierende Raststruktur (72b) des Anbindungsgrundkörpers (30b) zu drücken.

13. Flugzeugsitzbefestigungsvorrichtung (10a; 10b) nach einem der vorhergehenden Ansprüche, **gekennzeichnet durch** zumindest ein Fittingverriegelungselement (90a; 90b), das translatorisch beweglich an dem Anbindungsgrundkörper (30a; 30b) gelagert und dazu vorgesehen ist, das Fittingelement (46a; 46b) in der Befestigungsschiene (14a) zu verriegeln.

14. Flugzeugsitzbefestigungsvorrichtung (10a; 10b) nach Anspruch 13, **dadurch gekennzeichnet, dass** das zumindest eine Fittingverriegelungselement (90a; 90b) und der Anbindungsgrundkörper (30a; 30b) über zumindest eine weitere Schienenverbindung (94a, 96a) miteinander gekoppelt sind.

15. Flugzeugsitzbefestigungsvorrichtung (10a; 10b) nach Anspruch 13 oder 14, **dadurch gekennzeichnet, dass** das zumindest eine Fittingverriegelungselement (90a; 90b) teilweise in die Befestigungsschiene (14a) versenkbar ist.

16. Flugzeugsitzvorrichtung mit zumindest einem Flugzeugsitz und mit zumindest einer Flugzeugsitzbefestigungsvorrichtung (10a; 10b) nach einem der Ansprüche 1 bis 15.

## Claims

1. Aircraft seat fastening device (10a; 10b) for fastening at least a portion of an aircraft seat to at least one fastening rail (14a, 16a) that is fastened to an aircraft structure,
with a seat base structure (18a; 18b),
with at least one fitting element (46a; 46b) which is configured to be coupled with the fastening rail (14a, 16a),
and with at least one seat foot unit (28a, 40a; 28b) which is configured, at least in the event of an overload, to allow at least one compensation movement of the seat base structure (18a; 18b), in particular relative to the fastening rail (14a, 16a),
**characterized in that** the at least one seat foot unit (28a, 40a; 28b) comprises a connecting base body (30a; 30b), which is connected to the fitting element (46a; 46b), and a compensating base body (32a; 32b), which is rigidly connected to the seat base structure (18a; 18b) in any operation state,
wherein the connecting base body (30a; 30b) and the compensating base body (32a; 32b) are coupled with each other via at least one rail connection (58a, 60a) and are supported movably relative to each other along a guide path (62a; 62b).

2. Aircraft seat fastening device (10a; 10b) according to claim 1, **characterized in that** a main extension path of the at least one rail connection (58a, 60a) is oriented at least substantially perpendicular to a mounting plane.

3. Aircraft seat fastening device (10a; 10b) according to claim 1 or 2, **characterized in that** the seat foot unit (28a; 28b) comprises at least one blocking unit (68a; 102b), which is configured to block and/or delimit a movement of the seat base structure (18a; 18b) in at least one direction.

4. Aircraft seat fastening device (10a; 10b) according to claim 3,
**characterized in that** the blocking unit (68a; 102b) comprises at least one form-fitting element (70a; 104b), which is configured to engage into a corresponding latching structure (72a; 72b) of the connecting base body (30a; 30b).

5. Aircraft seat fastening device (10a) according to claim 4,
**characterized in that** the form-fitting element (70a) is realized at least partly as a leaf spring.

6. Aircraft seat fastening device (10a) according to claim 4 or 5,
**characterized in that** the form-fitting element (70a) is connected to the compensating base body (32a) in a form-fitting and/or force-fitting manner by means of a fastening element (82a) of the blocking unit (68a).

7. Aircraft seat fastening device (10a) according to one of claims 4 to 6, **characterized in that** the connecting base body (30a) has a recess (86a) configured to at least partly receive the fastening element (82a) of the blocking unit (68a).

8. Aircraft seat fastening device (10a) according to one of the preceding claims, **characterized in that** the form-fitting element (70a) has a groove (78a) whose the main extension path is oriented at least substantially parallel to a main extension path of the at least one rail connection (58a, 60a).

9. Aircraft seat fastening device (10a) according to claim 8,
**characterized in that** the blocking unit (68a) comprises an abutment element (80a), which is fixedly connected to the connecting base body (30a), is guided in the groove (78a) of the form-fitting element (70a) and is configured to delimit a displacement of the seat base structure (18a), in particular a displacement of the compensating base body (32a) relative to the connecting base body (30a).

10. Aircraft seat fastening device (10b) according to claim 4,
**characterized in that** the form-fitting element (104b) is supported so as to be translationally movable relative to the compensating base body (32b).

11. Aircraft seat fastening device (10b) according to claim 4 or 10,
**characterized in that** a movement axis of the form-fitting element (104b) is oriented at least substantially parallel to a mounting plane.

12. Aircraft seat fastening device (10b) according to one of claims 4, 10 or 11, **characterized in that** the blocking unit (102b) comprises a spring element (110b), which is arranged between the compensating base body (32b) and the form-fitting element (104b) and is configured to press the form-fitting element (104b) against the corresponding latching structure (72b) of the connecting base body (30b).

13. Aircraft seat fastening device (10a; 10b) according to one of the preceding claims,
**characterized by** at least one fitting-locking element (90a; 90b), which is supported so as to be translationally movable on the connecting base body (30a; 30b) and is configured to lock the fitting element (46a; 46b) in the fastening rail (14a).

14. Aircraft seat fastening device (10a; 10b) according to claim 13,
**characterized in that** the at least one fitting-locking element (90a; 90b) and the connecting base body (30a; 30b) are coupled with each other via at least one further rail connection (94a, 96a).

15. Aircraft seat fastening device (10a; 10b) according to claim 13 or 14, **characterized in that** the at least one fitting-locking element (90a; 90b) is partly retractable into the fastening rail (14a).

16. Aircraft seat device with at least one aircraft seat and with at least one aircraft seat fastening device (10a; 10b) according to one of claims 1 to 15.

## Revendications

1. Dispositif de fixement de siège d'aéronef (10a ; 10b) pour le fixement au moins d'une partie d'un siège d'aéronef à au moins un rail de fixement (14a, 16a) qui est fixé sur une structure d'aéronef,
ledit dispositif de fixement de siège d'aéronef (10a ; 10b) comprenant une structure de base de siège (18a ; 18b),
comprenant au moins un élément de raccord (46a ; 46b) qui est prévu pour être couplé avec le rail de fixation (14a, 16a),
et comprenant au moins une unité de pied de siège (28a, 40a ; 28b) qui est prévue, au moins dans un cas de surcharge, pour permettre au moins un mouvement de compensation de la structure de base de siège (18a ; 18b), en particulier par rapport au rail de fixation (14a, 16a),
**caractérisé en ce que** l'au moins une unité de pied de siège (28a, 40a ; 28b) inclut un corps de base de liaison (30a ; 30b) lié à l'élément de raccord (46a ; 46b), et un corps de base de compensation (32a ; 32b) lié rigidement à la structure de base de siège (18a ; 18b) dans chaque état de fonctionnement,
le corps de base de liaison (30a ; 30b) et le corps de base de compensation (32a ; 32b) étant couplés l'un avec l'autre par au moins une liaison à rail (58a, 60a) et étant supportés de manière mobile l'un par rapport à l'autre le long d'une voie de guidage (62a ; 62b).

2. Dispositif de fixement de siège d'aéronef (10a ; 10b) selon la revendication 1, **caractérisé en ce qu'**une voie d'extension principale de l'au moins une liaison à rail (58a, 60a) est orientée au moins sensiblement perpendiculairement à un plan de montant.

3. Dispositif de fixement de siège d'aéronef (10a ; 10b) selon la revendication 1 ou 2,
**caractérisé en ce que** l'unité de pied de siège (28a ; 28b) inclut au moins une unité de blocage (68a ; 102b) qui est prévue pour bloquer et/ou délimiter un mouvement de la structure de base de siège (18a ; 18b) dans au moins une direction.

4. Dispositif de fixement de siège d'aéronef (10a ; 10b) selon la revendication 3, **caractérisé en ce que** l'unité de blocage (68a ; 102b) comprend au moins un élément de liaison par forme (70a ; 104b) prévu pour engrener dans une structure d'encliquetage correspondante (72a ; 72b) du corps de base de liaison (30a ; 30b).

5. Dispositif de fixement de siège d'aéronef (10a) selon la revendication 4, **caractérisé en ce que** l'élément de liaison par forme (70a) est réalisé au moins partiellement comme ressort à lame.

6. Dispositif de fixement de siège d'aéronef (10a) selon la revendication 4 ou 5, **caractérisé en ce que** l'élément de liaison par forme (70a) est lié au corps de base de compensation (32a) moyennant une liaison par forme et/ou par force par le biais d'un élément de fixement (82a) de l'unité de blocage (68a).

7. Dispositif de fixement de siège d'aéronef (10a) selon l'une quelconque des revendications 4 à 6,
**caractérisé en ce que** le corps de base de liaison (30a) inclut un évidement (86a) prévu pour recevoir au moins partiellement l'élément de fixement (82a) de l'unité de blocage (68a).

8. Dispositif de fixement de siège d'aéronef (10a) selon l'une quelconque des revendications précédentes,
**caractérisé en ce que** l'élément de liaison par forme (70a) comprend une rainure (78a) dont la voie d'extension principale est orientée au moins sensiblement en parallèle avec une voie d'extension principale de l'au moins une liaison à rail (58a, 60a).

9. Dispositif de fixement de siège d'aéronef (10a) selon la revendication 8, **caractérisé en ce que** l'unité de blocage (68a) comprend un élément de butée (80a) qui est lié fixement au corps de base de liaison (30a), est guidé dans la rainure (78a) de l'élément de liaison par forme (70a) et est prévu pour limiter un déplacement de la structure de base de siège (18a), en particulier un déplacement du corps de base de compensation (32a) par rapport au corps de base de liaison (30a).

10. Dispositif de fixement de siège d'aéronef (10b) selon la revendication 4, **caractérisé en ce que** l'élément de liaison par forme (104b) est supporté de manière mobile en translation par rapport au corps de base de compensation (32b).

11. Dispositif de fixement de siège d'aéronef (10b) selon la revendication 4 ou 10, **caractérisé en ce qu'**un axe de mouvement de l'élément de liaison par forme (104b) est orienté au moins sensiblement en parallèle avec un plan de montant.

12. Dispositif de fixement de siège d'aéronef (10b) selon l'une quelconque des revendications 4, 10 ou 11,
**caractérisé en ce que** l'unité de blocage (102b) comprend un élément de ressort (110b) qui est disposé entre le corps de base de compensation (32b) et l'élément de liaison par forme (104b) et est prévu pour presser l'élément de liaison par forme (104b) contre la structure d'encliquetage correspondante (72b) du corps de base de liaison (30b).

13. Dispositif de fixement de siège d'aéronef (10a ; 10b) selon l'une quelconque des revendications précédentes,
**caractérisé par** au moins un élément à verrouillage de raccord (90a ; 90b) qui est supporté de manière mobile en translation sur le corps de base de liaison (30a ; 30b) et est prévu pour verrouiller l'élément de raccord (46a ; 46b) dans le rail de fixement (14a).

14. Dispositif de fixement de siège d'aéronef (10a ; 10b) selon la revendication 13, **caractérisé en ce que** l'au moins un élément à verrouillage de raccord (90a ; 90b) et le corps de base de liaison (30a ; 30b) sont couplés l'un avec l'autre par le biais d'au moins une autre liaison à rail (94a, 96a).

15. Dispositif de fixement de siège d'aéronef (10a ; 10b) selon la revendication 13 ou 14,
**caractérisé en ce que** l'au moins un élément à verrouillage de raccord (90a ; 90b) peut être partiellement enfoncé dans le rail de fixement (14a).

16. Dispositif de siège d'aéronef comprenant au moins un siège d'aéronef et comprenant au moins un dispositif de fixement de siège d'aéronef (10a ; 10b) selon l'une quelconque des revendications 1 à 15.
